# EUROPEAN PATENT APPLICATION

(11) **EP 4 825 524 A1**
(43) Date of publication of application: **21.10.2026**
(21) Application number: 24921975.9
(22) Date of filing: 25.11.2024
(51) Int. Cl.: B23K 35/363, B23K 35/26, C08G 59/42, C22C 13/00

(54) **FLUX, SOLDER PASTE, AND METHOD FOR PRODUCING BONDED BODY**

(30) Priority: 02.02.2024 JP 2024015212
(71) Applicant: Senju Metal Industry Co., Ltd., Tokyo 120-8555 (JP)
(72) Inventor: MIYAGI, Nanako, Tokyo 120-8555 (JP); HASHIMOTO, Yutaka, Tokyo 120-8555 (JP); TAKAGI, Kazuyori, Tokyo 120-8555 (JP)
(74) Representative: Lavoix
(86) International application number: PCT/JP2024/041622
(87) International publication number: WO 2025/164056

(57) **Abstract**

A flux according to the present invention contains a compound having an oxyalkylene group and an epoxy group, at least one acid anhydride selected from the group consisting of succinic anhydride and derivatives thereof, a rosin, a solvent, a thixotropic agent, and an activator. A method for producing a bonded body according to the present invention includes a step of obtaining a bonded body by soldering a component and a substrate, in which, during the soldering, reflow is performed under an air atmosphere using a solder paste that contains a solder alloy powder and the flux according to the present invention. By employing such a flux and a solder paste containing the flux, occurrence of cracking of flux residue due to temperature changes can be suppressed even in the case of air reflow soldering,

## Description

### TECHNICAL FIELD

The present invention relates to a flux, a solder paste, and a method for producing a bonded body.

Priority is claimed on Japanese Patent Application No. 2024-15212, filed February 2, 2024, the content of which is incorporated herein by reference.

### BACKGROUND ART

In the case of manufacturing an electronic component, fixation of the component to a substrate and electrical connection of the component to the substrate are performed by soldering. In the soldering, a flux, a solder powder, and a solder paste obtained by mixing the flux and the solder powder are used.

The flux has an effect of chemically removing metal oxides present on the metal surface of an object to be bonded, which is a soldering target, and on the solder, thereby enabling the movement of metal elements at the boundary between the metal surface of the object to be bonded and the solder. Therefore, by performing soldering using the flux, an intermetallic compound is formed between the two, whereby a strong bond is obtained.

In soldering using a solder paste, first, the solder paste is printed on a substrate, a component is mounted thereon, and the substrate on which the component is mounted is heated in a heating furnace called a reflow furnace. As a result, the solder powder contained in the solder paste melts, and the component is bonded to the substrate, whereby a bonded body is obtained.

In the case of the soldering, in order to prevent oxidation of the component or the like due to oxygen in the furnace, reflow soldering may be performed in an atmosphere in which the oxygen concentration in the furnace is lowered by using nitrogen.

The flux used for the reflow soldering generally contains a resin component, a solvent, a thixotropic agent, an activator, and the like. The resin component contained in the flux that is applied onto the substrate may remain as a flux residue in the bonded body after the reflow. The flux residue may generate crack due to a temperature rise caused by operation of an apparatus including the bonded body, or due to a rise or fall in ambient temperature.

In contrast, for example, Patent Document 1 proposes a flux using rosin together with polybutadiene having a high iodine value, and a solder paste using the flux. According to the solder paste disclosed in Patent Document 1, even when the temperature of the external environment changes, occurrence of cracks in the flux residue is suppressed, and tackiness is less likely to occur in the flux residue.

### Citation List

### Patent Document

Patent Document 1: Japanese Unexamined Patent Application, First Publication No. 2013-94781

### SUMMARY OF INVENTION

### Technical Problem

Incidentally, in recent years, also in the solder business, development of production processes for flow soldering and related products has been progressing in order to contribute to realization of carbon neutrality. Under such circumstances, there is a demand for reduction in nitrogen usage and the like.

However, when air reflow soldering is attempted in a heating furnace using only air, it is difficult for a conventional solder paste to suppress occurrence of cracking of flux residue due to temperature changes.

The present invention has been made in view of the above-described circumstances, and provides a flux, a solder paste, and a method for producing a bonded body using the same, which can suppress occurrence of cracking of flux residue due to temperature changes even in the case of air reflow soldering.

### Solution to Problem

In order to solve the above-described problem, the present invention employs the following configurations.

[1] A flux containing: a component (P) that is a compound having an oxyalkylene group and an epoxy group; at least one acid anhydride selected from the group consisting of succinic anhydride and derivatives of the succinic anhydride; a rosin; a solvent; a thixotropic agent; and an activator.
[2] The flux according to [1], in which the oxyalkylene group is at least one selected from the group consisting of an oxyethylene group and an oxypropylene group.
[3] The flux according to [1] or [2], in which an epoxy equivalent of the component (P) is 120 g/eq or more.
[4] The flux according to any one of [1] to [3], in which the component (P) includes a propylene oxide-modified bisphenol-type epoxy resin.
[5] The flux according to any one of [1] to [4], in which the acid anhydride is a compound represented by the following General Formula (AA-1). 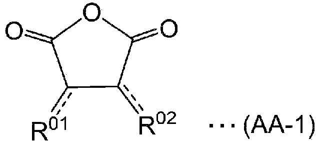 [in the formula, R⁰¹ and R⁰² each independently represent a hydrocarbon group which may have a substituent, or a hydrogen atom, a bond between a carbon atom constituting a five-membered ring and R⁰¹ is a double bond or a single bond, and a bond between a carbon atom constituting the five-membered ring and R⁰² is a double bond or a single bond]
[6] The flux according to [5], in which R⁰¹ or R⁰² in Formula (AA-1) is a chain-like unsaturated aliphatic hydrocarbon group having 3 to 18 carbon atoms.
[7] The flux according to any one of [1] to [6], in which the acid anhydride includes 2-octenylsuccinic anhydride.
[8] The flux according to any one of [1] to [7], in which the rosin includes at least one selected from the group consisting of an acrylic acid-modified hydrogenated rosin, a polymerized rosin, and a hydrogenated rosin.
[9] The flux according to any one of [1] to [8], in which a mixing ratio of the rosin to the acid anhydride is, as a mass ratio represented by rosin/acid anhydride, more than 5 and less than 25.
[10] The flux according to any one of [1] to [9], in which a mixing ratio of the rosin to the component (P) is, as a mass ratio represented by rosin/component (P), 4.0 or less.
[11] A flux containing: a reaction product of at least one selected from the group consisting of succinic anhydride, derivatives of succinic anhydride, and a rosin, with a component (P) that is a compound having an oxyalkylene group and an epoxy group; a solvent; a thixotropic agent; and an activator.
[12] The flux according to [11], further containing at least one acid selected from the group consisting of succinic acid and derivatives of succinic acid, or an acid anhydride of the at least one acid.
[13] The flux according to [11] or [12], further containing a rosin.
[14] A flux containing: a reaction product of at least one selected from the group consisting of succinic anhydride, derivatives of succinic anhydride, and a rosin, with a component (P) that is a compound having an oxyalkylene group and an epoxy group; a solvent; a thixotropic agent; an activator; a rosin; and at least one acid selected from the group consisting of succinic acid and derivatives of succinic acid, or an acid anhydride of the at least one acid.
[15] The flux according to any one of [11] to [14], in which the activator includes an imidazole compound.
[16] A solder paste containing: a solder alloy powder; and the flux according to any one of [1] to [15].
[17] A method for producing a bonded body, including a step of soldering a component and a substrate to obtain the bonded body, in which, during the step of soldering, reflow is performed under an air atmosphere using the solder paste according to [16].

### Advantageous Effects of Invention

According to the present invention, it is possible to provide a flux, a solder paste, and a method for producing a bonded body using the same, which can suppress occurrence of cracking of flux residue due to temperature changes even in the case of air reflow soldering.

### BRIEF DESCRIPTION OF DRAWINGS

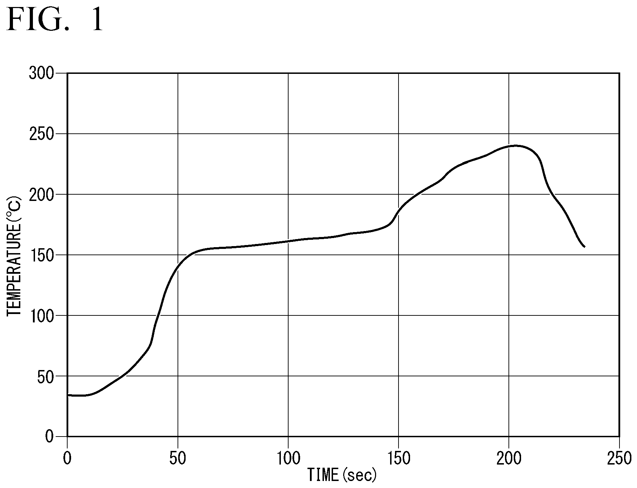

[FIG. 1] A view representing a reflow profile in evaluation of Examples.

### DESCRIPTION OF EMBODIMENTS

In the present specification, "including (comprising)" and "containing" are concepts respectively encompassing any of "include (comprise)", "consist essentially of", and "consist of".

### (Flux)

One embodiment of a flux according to a first aspect contains an epoxy resin having an oxyalkylene group, at least one acid anhydride selected from the group consisting of succinic anhydride and derivatives of succinic anhydride, a rosin, a solvent, a thixotropic agent, and an activator.

The flux according to the embodiment is suitably used for reflow soldering, and in particular, can suppress occurrence of cracking of flux residue due to temperature changes in a solder joint where reflow is performed under an air atmosphere. The flux according to the present embodiment is characterized by using in combination an epoxy resin having an oxyalkylene group, and at least one acid anhydride selected from the group consisting of succinic anhydride and derivatives thereof.

### <Epoxy resin having oxyalkylene group>

The flux according to the present embodiment contains an epoxy resin having an oxyalkylene group (hereinafter, also referred to as "component (P)").

The component (P) is a compound having an oxyalkylene group and an epoxy group, and may be any polymer that cures by forming a crosslinked structure through the epoxy group.

Examples of the oxyalkylene group in the component (P) include an oxyethylene group, an oxypropylene group, and an oxybutylene group, and among these, at least one selected from the group consisting of an oxyethylene group and an oxypropylene group is preferable from the viewpoint of balance between hydrophilicity and hydrophobicity.

The epoxy equivalent of the component (P) is preferably 120 g/eq or more, more preferably 150 g/eq or more and 600 g/eq or less, and still more preferably 200 g/eq or more and 450 g/eq or less.

By using the component (P) having the epoxy equivalent within the above-described preferred range, the occurrence of cracking of flux residue due to temperature changes is easily suppressed in the case of air reflow soldering.

The epoxy equivalent of the epoxy resin can be measured by a potentiometric titration method standardized in JIS K 7236:2001.

Examples of the component (P) include polyalkylene glycol-type epoxy resins and alkylene oxide-modified bisphenol-type epoxy resins.

Preferred examples of the component (P) include a polyalkylene glycol-type epoxy resin represented by General Formula (P1) shown below (hereinafter, also referred to as "component (P1)"), and an alkylene oxide-modified bisphenol-type epoxy resin represented by General Formula (P2) shown below (hereinafter, also referred to as "component (P2)"). 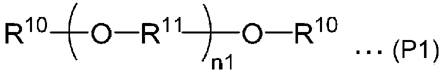
[in the formula, R¹⁰ is an epoxy group-containing group, a plurality of R¹⁰'s may be the same or different from each other, R¹¹ is an alkylene group having 2 to 4 carbon atoms, and n1 represents the number of repetitions of a structure in parentheses.] 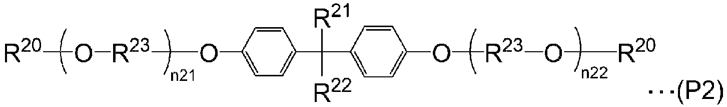
[in the formula, R²⁰ is an epoxy group-containing group, a plurality of R²⁰'s may be the same or different from each other, R²¹ and R²² each independently represent a hydrocarbon group having 1 to 6 carbon atoms, or a hydrogen atom, R²³ is an alkylene group having 2 to 4 carbon atoms, a plurality of R²³'s may be the same or different from each other, and n21 and n22 each independently represent the number of repetitions of a structure in parentheses.]

### <<Component (P1)>>

The component (P1) is a polyalkylene glycol-type epoxy resin represented by General Formula (P1) above.

In Formula (P1), R¹⁰ is an epoxy group-containing group. A plurality of R¹⁰'s may be the same or different from each other.

Examples of the epoxy group-containing group for R¹⁰ include a group consisting only of an epoxy group; a group consisting only of an alicyclic epoxy group; and a group having an epoxy group or an alicyclic epoxy group, and a divalent linking group.

The alicyclic group serving as a basic skeleton of the alicyclic epoxy group may be monocyclic or polycyclic. Examples of the monocyclic alicyclic group include a cyclopropyl group, a cyclobutyl group, a cyclopentyl group, a cyclohexyl group, a cycloheptyl group, and a cyclooctyl group. In addition, examples of the polycyclic alicyclic group include a norbornyl group, an isobornyl group, a tricyclononyl group, a tricyclodecyl group, and a tetracyclododecyl group. Furthermore, hydrogen atoms of these alicyclic groups may be substituted by an alkyl group, an alkoxy group, a hydroxyl group, or the like.

As the group having an epoxy group or an alicyclic epoxy group and a divalent linking group, it is preferable that the epoxy group or the alicyclic epoxy group is bonded through the divalent linking group bonded to an oxygen atom (-O-) in the formula.

The epoxy group-containing group for R¹⁰ is preferably a glycidyl group.

In Formula (P1), R¹¹ is an alkylene group having 2 to 4 carbon atoms, preferably an alkylene group having 2 or 3 carbon atoms, and more preferably an ethylene group (-CH₂CH₂-) or a propylene group (-CH(CH₃)-CH₂-).

In Formula (P1), n1 represents the number of repetitions of a structure in parentheses, and is preferably 2 to 25.

For the component (P1), commercially available products such as DENACOL series manufactured by Nagase ChemteX Corporation can be used. Specifically, a special epoxy compound (polyethylene glycol diglycidyl ether or polypropylene glycol diglycidyl ether) obtained by converting an alcoholic hydroxyl group into a glycidyl ether can be used.

### <<Component (P2)>>

The component (P2) is an alkylene oxide-modified bisphenol-type epoxy resin represented by General Formula (P2) above.

In Formula (P2), R²⁰ is an epoxy group-containing group. A plurality of R²⁰'s may be the same or different from each other.

Examples of the epoxy group-containing group for R²⁰ include the same groups as the epoxy group-containing group for R¹⁰ described above. The epoxy group-containing group for R²⁰ is preferably a glycidyl group.

In Formula (P2), R²¹ and R²² each independently represent a hydrocarbon group having 1 to 6 carbon atoms, or a hydrogen atom.

The hydrocarbon group for R²¹ and R²² may each be a chain-like hydrocarbon group, an alicyclic group, or an aromatic hydrocarbon group. R²¹ and R²² are each preferably a chain-like hydrocarbon group, preferably an alkyl group having 1 to 5 carbon atoms, and more preferably a methyl group, an ethyl group, a propyl group, or an isopropyl group. Among the above, R²¹ and R²² are each preferably a linear alkyl group or a hydrogen atom, and particularly preferably a methyl group or a hydrogen atom.

**In** Formula (P2), a plurality of R²¹'s may be the same or different from each other. A plurality of R²²'s may be the same or different from each other. It is preferable that R²¹ and R²² are identical to each other.

In Formula (P2), R²³ is an alkylene group having 2 to 4 carbon atoms, preferably an alkylene group having 2 or 3 carbon atoms, and more preferably a propylene group (-CH₂-CH(CH₃)- or -CH(CH₃)-CH₂-). A plurality of R²³'s may be the same or different from each other. In Formula (P2), n21 represents the number of repetitions of a structure in parentheses, and is preferably 1 to 12; and n22 represents the number of repetitions of a structure in parentheses, and is preferably 1 to 12.

For the component (P2), commercially available products such as trade name "EP-4000S" manufactured by ADEKA CORPORATION, trade name "AER9000" manufactured by Asahi Kasei Corporation, and the like can be used.

In the flux according to the present embodiment, the component (P) may be used alone or a combination of two or more thereof may be used.

As the component (P), it is preferable to be at least one selected from the group consisting of a polyalkylene glycol-type epoxy resin and an alkylene oxide-modified bisphenol-type epoxy resin; it is more preferable to be at least one selected from the group consisting of the component (P1) and the component (P2), it is still more preferable to include the component (P2); and it is particularly preferable to include a propylene oxide-modified bisphenol-type epoxy resin.

Examples of the propylene oxide-modified bisphenol-type epoxy resin include a propylene oxide-modified bisphenol A-type epoxy resin and a propylene oxide-modified bisphenol F-type epoxy resin. Among the above, it is most preferable that the component (P) includes a propylene oxide-modified bisphenol A-type epoxy resin.

The above-mentioned trade name "EP-4000S" manufactured by ADEKA CORPORATION and trade name "AER9000" manufactured by Asahi Kasei Corporation correspond to the propylene oxide-modified bisphenol A-type epoxy resin.

The amount of the component (P) in the flux according to the present embodiment is preferably 3% by mass or more and 17% by mass or less, and more preferably 8% by mass or more and 12% by mass or less with respect to the total mass (100% by mass) of the above-described flux.

When the amount of the component (P) is equal to or more than the lower limit of the above-described preferred range, the occurrence of cracking of flux residue due to temperature changes is easily suppressed in the case of air reflow soldering; and when it is equal to or less than the upper limit of the above-described preferred range, tackiness of the flux residue tends to be reduced.

### <At least one acid anhydride selected from group consisting of succinic anhydride and derivatives thereof>

The flux according to the present embodiment contains at least one acid anhydride selected from the group consisting of succinic anhydride and derivatives thereof (hereinafter, also referred to as "component (AA)").

The component (AA) may be any one as long as it acts as a curing agent for the component (P).

As used herein, the derivative of succinic anhydride means a compound in which a hydrogen atom on one or both of two methylene groups (-CH₂-) constituting a five-membered ring of succinic anhydride is substituted.

Preferred examples of the component (AA) include a compound represented by General Formula (AA-1) shown below. 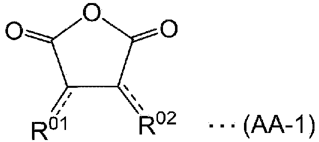 [in the formula, R⁰¹ and R⁰² each independently represent a hydrocarbon group which may have a substituent, or a hydrogen atom, a bond between a carbon atom constituting a five-membered ring and R⁰¹ is a double bond or a single bond, and a bond between a carbon atom constituting the five-membered ring and R⁰² is a double bond or a single bond]

In Formula (AA-1), R⁰¹ and R⁰² each independently represent a hydrocarbon group which may have a substituent, or a hydrogen atom.

The number of carbon atoms of the hydrocarbon group for R⁰¹ and R⁰² is preferably 1 to 20.

The hydrocarbon group for R⁰¹ and R⁰² may each be a chain-like hydrocarbon group, an alicyclic group, or an aromatic hydrocarbon group.

The chain-like hydrocarbon group and the alicyclic group for R⁰¹ and R⁰² may each be a saturated hydrocarbon group or an unsaturated hydrocarbon group. The chain-like hydrocarbon group for R⁰¹ and R⁰² may be linear or branched.

Among the above, since the occurrence of cracking of flux residue due to temperature changes is easily suppressed in the case of air reflow soldering, the hydrocarbon group for R⁰¹ and R⁰² is preferably a chain-like hydrocarbon group; and among these, a chain-like unsaturated aliphatic hydrocarbon group is more preferable.

Furthermore, the hydrocarbon group for R⁰¹ and R⁰² is preferably a chain-like unsaturated aliphatic hydrocarbon group having 3 to 18 carbon atoms, more preferably a chain-like unsaturated aliphatic hydrocarbon group having 3 to 12 carbon atoms, and particularly preferably a chain-like unsaturated aliphatic hydrocarbon group having 8 carbon atoms.

In Formula (AA-1), a bond between a carbon atom constituting the five-membered ring and R⁰¹ is a double bond or a single bond. A bond between a carbon atom constituting the five-membered ring and R⁰² is a double bond or a single bond. In the case of a double bond, the carbon atom constituting the five-membered ring and R⁰¹ form, for example, a vinylidene group. In the case of a double bond, the carbon atom constituting the five-membered ring and R⁰² form, for example, a vinylidene group.

Specific examples of the component (AA) are shown below.

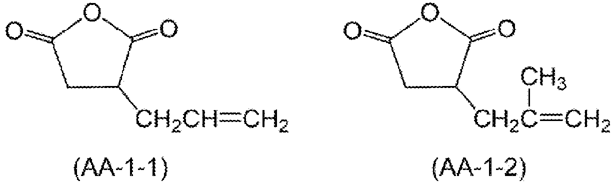

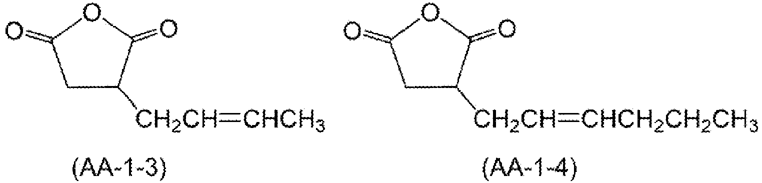

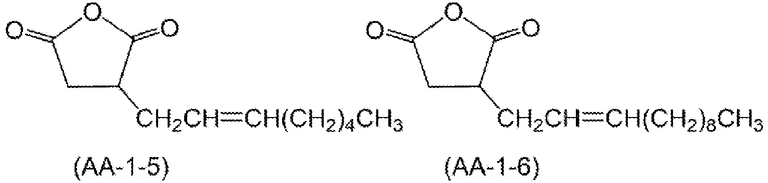

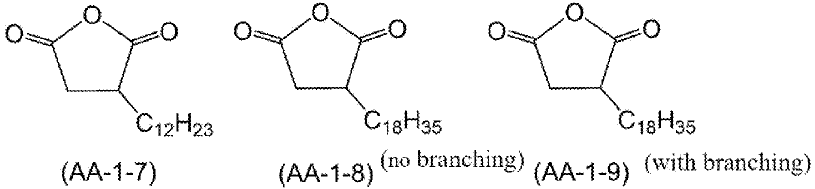

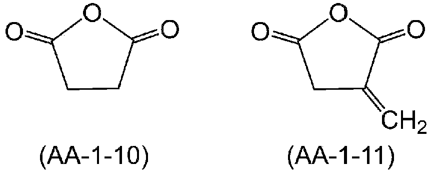

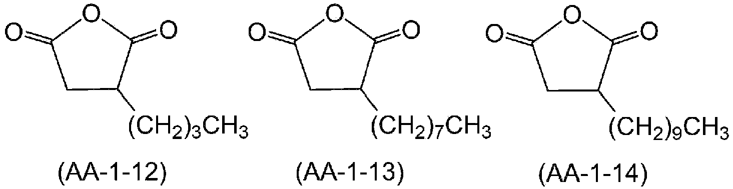

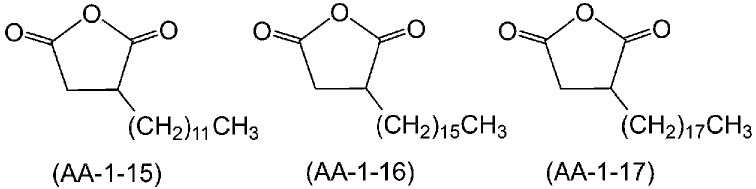

In the flux according to the present embodiment, the component (AA) may be used alone or a combination of two or more thereof may be used.

As the component (AA), it is preferable to include at least one selected from the group consisting of compounds represented by Chemical Formulae (AA-1-1) to (AA-1-9), (AA-1-10), (AA-1-11), and (AA-1-12) to (AA-1-17) above; it is more preferable to include at least one selected from the group consisting of compounds represented by Chemical Formulae (AA-1-1) to (AA-1-9) above; it is still more preferable to include at least one selected from the group consisting of compounds respectively represented by Chemical Formulae (AA-1-1) to (AA-1-7) above; and it is particularly preferable to include the compound represented by Chemical Formula (AA-1-5), that is, 2-octenylsuccinic anhydride.

The amount of the component (AA) in the flux according to the present embodiment is preferably 0.5% by mass or more and 5% by mass or less, and more preferably 1% by mass or more and 3% by mass or less with respect to the total mass (100% by mass) of the above-described flux.

When the amount of the component (AA) is equal to or more than the lower limit of the above-described preferred range, the occurrence of cracking of flux residue due to temperature changes is easily suppressed in the case of air reflow soldering; and when it is equal to or less than the upper limit of the above-described preferred range, tackiness of the flux residue tends to be reduced.

### <Rosin>

The flux according to the present embodiment contains a rosin.

In the present invention, the term "rosin" includes natural resins containing a mixture of abietic acid and its isomer with abietic acid as a main component, and resins (may be referred to as rosin derivatives) which are obtained by chemically modifying the natural resins.

As an example, the amount of abietic acid in the natural resin is 40% by mass or more and 80% by mass or less with respect to the natural resin.

In the present specification, the term "main component" refers to a component contained in a compound in an amount of 40% by mass or more, among components constituting the compound.

Examples of typical isomers of abietic acid include neoabietic acid, palustric acid, and levopimaric acid.

Examples of the "natural resin" include gum rosin, wood rosin, and tall oil rosin.

In the present invention, the "resins (rosin derivatives) which are obtained by chemically modifying natural resins" include those obtained by subjecting the above-described "natural resins" to one or more treatments selected from the group consisting of hydrogenation, dehydrogenation, neutralization, alkylene oxide addition, amidation, dimerization and multimerization, esterification, and Diels-Alder cycloaddition.

Examples of the rosin derivatives include a purified rosin and a modified rosin.

Examples of the modified rosin include a hydrogenated rosin, a polymerized rosin, a polymerized hydrogenated rosin, a disproportionated rosin, an acid-modified rosin, a rosin ester, an acid-modified hydrogenated rosin, an acid anhydride-modified hydrogenated rosin, an acid-modified disproportionated rosin, an acid anhydride-modified disproportionated rosin, a phenol-modified rosin, an α,β unsaturated carboxylic acid-modified product (such as an acrylated rosin, a maleated rosin, and a fumarated rosin), purified products, hydrides, and disproportionated products of the polymerized rosin, purified products, hydrides, and disproportionated products of the α, β unsaturated carboxylic acid-modified product, a rosin alcohol, a rosin amine, a hydrogenated rosin alcohol, a rosin ester, a hydrogenated rosin ester, a rosin soap, a hydrogenated rosin soap, and an acid-modified rosin soap.

Examples of the rosin amine include a dehydroabietylamine and a dihydroabietylamine. The rosin amine means a so-called disproportionated rosin amine.

In the flux according to the present embodiment, the rosin may be used alone or a combination of two or more kinds thereof may be used.

The rosin preferably includes a rosin derivative; more preferably includes at least one selected from the group consisting of an acid-modified rosin, a hydrogenated rosin, a polymerized rosin, and an acid-modified hydrogenated rosin; still more preferably includes at least one selected from the group consisting of an acid-modified hydrogenated rosin, a hydrogenated rosin, and a polymerized rosin; particularly preferably includes at least one selected from the group consisting of an acid-modified hydrogenated rosin and a polymerized rosin; and most preferably includes at least an acid-modified hydrogenated rosin.

As the acid-modified hydrogenated rosin, an acrylic acid-modified hydrogenated rosin is preferable from the viewpoint of solderability. That is, the above-described rosin preferably includes at least one selected from the group consisting of an acrylic acid-modified hydrogenated rosin, a polymerized rosin, and a hydrogenated rosin.

The rosin used in the flux according to the present embodiment may be an acid-modified hydrogenated rosin alone, a combination of an acid-modified hydrogenated rosin and a polymerized rosin, a combination of an acid-modified hydrogenated rosin and a hydrogenated rosin, or a polymerized rosin alone.

The amount of the rosin in the flux according to the present embodiment is preferably 10% by mass or more, more preferably 10% by mass or more and 32.5% by mass or less, and still more preferably 15% by mass or more and 25% by mass or less with respect to the total mass (100% by mass) of the above-described flux.

When the amount of the rosin is equal to or more than the lower limit of the above-described preferred range, the solder alloy powder is easily melted, and the solderability is easily enhanced; and when it is equal to or less than the upper limit of the above-described preferred range, the flux residue is easily reduced.

In the flux according to the present embodiment, a mixing ratio of the above-described rosin to the above-described acid anhydride is preferably, as a mass ratio represented by rosin/acid anhydride, more than 5 and less than 25, more preferably 6 or more and 20 or less, still more preferably 6.5 or more and 17.5 or less, and particularly preferably 12.5 or more and 15 or less.

When the mass ratio represented by rosin/acid anhydride is more than the lower limit of the above-described preferred range, tackiness of the flux residue is easily reduced; and when it is less than the upper limit of the above-described preferred range, the occurrence of cracking of flux residue due to temperature changes is easily suppressed in the case of air reflow soldering.

In the flux according to the present embodiment, a mixing ratio of the above-described rosin to the above-described epoxy resin is preferably, as a mass ratio represented by rosin/epoxy resin, 4.0 or less, more preferably 1.25 or more and 3.75 or less, still more preferably 1.33 or more and 3.33 or less, and particularly preferably 1.5 or more and 3.0 or less.

When the mass ratio represented by rosin/epoxy resin is equal to or less than the upper limit of the above-described preferred range, the occurrence of cracking of flux residue due to temperature changes is easily suppressed in the case of air reflow soldering; and when it is equal to or more than the lower limit of the above-described preferred range, the tackiness of the flux residue tends to be reduced.

### <Solvent>

The flux according to the present embodiment contains a solvent.

Examples of the solvent include water, an alcohol-based solvent, a glycol ether-based solvent, and terpineols.

Examples of the alcohol-based solvent include isopropyl alcohol, 1,2-butanediol, 1,3-butanediol, isobornyl cyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 2-methylpentane-2,4-diol, 1,1,1-tris(hydroxymethyl)propane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, 1-ethynyl-1-cyclohexanol, 1,4-cyclohexanediol, 1,4-cyclohexanedimethanol, 2,4,7,9-tetramethyl-5-decyne-4,7-diol, 2-hexyl-1-decanol, and octanediol.

Examples of the glycol ether-based solvent include diethylene glycol mono-2-ethylhexyl ether, ethylene glycol monophenyl ether, diethylene glycol monohexyl ether (hexyl diglycol: HeDG), diethylene glycol dibutyl ether, triethylene glycol monomethyl ether, triethylene glycol monobutyl ether, triethylene glycol butyl methyl ether, tetraethylene glycol, tetraethylene glycol dimethyl ether; and monoalkyl propylene glycol.

Examples of the terpineols include α-terpineol, β-terpineol, γ-terpineol, and a terpineol mixture (that is, a mixture containing α-terpineol as a main component and containing β-terpineol or γ-terpineol).

Examples of other solvents include dioctyl sebacate and liquid paraffin.

In the flux according to the present embodiment, the solvent may be used alone or a combination of two or more kinds thereof may be used.

Among the above, the solvent is preferably a glycol ether-based solvent, and in particular, it is more preferable to use diethylene glycol monohexyl ether and triethylene glycol monomethyl ether in combination from the viewpoints of viscosity stability when formed into a solder paste and meltability of a solder alloy powder.

The amount of the solvent in the flux according to the present embodiment is the balance of the flux, and is determined depending on the amounts of other components.

For example, the amount of the solvent in the flux according to the present embodiment may be 20% by mass or more and 70% by mass or less, 25% by mass or more and 60% by mass or less, or 30% by mass or more and 50% by mass or less with respect to the total mass (100% by mass) of the above-described flux.

### <Thixotropic agent>

The flux according to the present embodiment contains a thixotropic agent.

Examples of the thixotropic agent include an amide-based thixotropic agent, an ester-based thixotropic agent, and a sorbitol-based thixotropic agent.

Examples of the amide-based thixotropic agent include a monoamide, a bisamide, and a polyamide.

Examples of the monoamide include lauric acid amide, palmitic acid amide, stearic acid amide, behenic acid amide, hydroxystearic acid amide, a saturated fatty acid amide, oleic acid amide, erucic acid amide, an unsaturated fatty acid amide, 4-methylbenzamide (p-toluamide), an aromatic amide, hexamethylene hydroxystearic acid amide, a substituted amide, methylol stearic acid amide, a methylol amide, and a fatty acid ester amide.

Examples of the bisamide include an ethylenebis fatty acid (C6 to C24 fatty acid) amide, an ethylenebis hydroxy fatty acid (C6 to C24 fatty acid) amide, a hexamethylenebis fatty acid (C6 to C24 fatty acid) amide, a hexamethylenebis hydroxy fatty acid (C6 to C24 fatty acid) amide, and an aromatic bisamide. Examples of a fatty acid which is a raw material of the above-described bisamide include stearic acid (having 18 carbon atoms), oleic acid (having 18 carbon atoms), and lauric acid (having 12 carbon atoms).

Examples of the polyamide include a saturated fatty acid polyamide, an unsaturated fatty acid polyamide, an aromatic polyamide, 1,2,3-propanetricarboxylic acid tris(2-methylcyclohexylamide), a cyclic amide oligomer, and an acyclic amide oligomer.

Examples of the above-described cyclic amide oligomer include amide oligomers obtained by cyclic polycondensation of a dicarboxylic acid and a diamine; amide oligomers obtained by cyclic polycondensation of a tricarboxylic acid and a diamine; amide oligomers obtained by cyclic polycondensation of a dicarboxylic acid and a triamine; amide oligomers obtained by cyclic polycondensation of a tricarboxylic acid and a triamine; amide oligomers obtained by cyclic polycondensation of a dicarboxylic acid, a tricarboxylic acid, and a diamine; amide oligomers obtained by cyclic polycondensation of a dicarboxylic acid, a tricarboxylic acid, and a triamine; amide oligomers obtained by cyclic polycondensation of a dicarboxylic acid, a diamine, and a triamine; amide oligomers obtained by cyclic polycondensation of a tricarboxylic acid, a diamine, and a triamine; and amide oligomers obtained by cyclic polycondensation of a dicarboxylic acid, a tricarboxylic acid, a diamine, and a triamine.

In addition, examples of the above-described acyclic amide oligomer include amide oligomers obtained by acyclic polycondensation of a monocarboxylic acid and a diamine and/or a triamine; and amide oligomers obtained by acyclic polycondensation of a dicarboxylic acid and/or a tricarboxylic acid and a monoamine. In the case of an amide oligomer containing a monocarboxylic acid or a monoamine, the monocarboxylic acid or the monoamine functions as a terminal molecule, resulting in an acyclic amide oligomer having a reduced molecular weight. In addition, when the acyclic amide oligomer is an amide compound obtained by acyclic polycondensation of a dicarboxylic acid and/or a tricarboxylic acid with a diamine and/or a triamine, the acyclic amide oligomer is an acyclic polymeric amide polymer. Furthermore, examples of the acyclic amide oligomers also include amide oligomers obtained by acyclic condensation of a monocarboxylic acid and a monoamine.

Examples of the ester-based thixotropic agent include an ester compound, and specific examples thereof include a hydrogenated castor oil and ethyl myristate.

Examples of the sorbitol-based thixotropic agent include dibenzylidene-D-sorbitol, bis(4-methylbenzylidene)-D-sorbitol, (D-)sorbitol, monobenzylidene(-D-)sorbitol, and mono(4-methylbenzylidene)-(D-)sorbitol.

In the flux according to the present embodiment, the thixotropic agent may be used alone or a combination of two or more kinds thereof may be used.

Among the above, the thixotropic agent preferably includes at least one selected from the group consisting of an amide-based thixotropic agent and an ester-based thixotropic agent, and more preferably, an amide-based thixotropic agent and an ester-based thixotropic agent are used in combination. Examples thereof include a combination of a polyamide and hydrogenated castor oil.

The amount of the thixotropic agent in the flux according to the present embodiment is preferably 2% by mass or more and 15% by mass or less, more preferably 4% by mass or more and 12% by mass or less, and further preferably 5% by mass or more and 9% by mass or less with respect to the total mass (100% by mass) of the above-described flux.

When the amount of the thixotropic agent is equal to or more than the lower limit of the above-described preferred range, stability over time (suppression of flux separation over time) is easily enhanced. On the other hand, when the amount of the thixotropic agent is equal to or less than the upper limit of the above-described preferred range, excessive increase in initial viscosity of the solder paste is easily suppressed.

### <Activator>

The flux according to the present embodiment contains an activator. Examples of the activator include an organic acid, a halogen compound, and an amine.

The total amount of the activator in the flux according to the present embodiment is preferably 25% by mass or less, more preferably 2.5% by mass or more and 20% by mass or less, and further preferably 6% by mass or more and 15% by mass or less with respect to the total mass (100% by mass) of the above-described flux.

### <<Organic acid>>

Examples of the organic acid include a carboxylic acid and an organic sulfonic acid. Examples of the carboxylic acid include an aliphatic carboxylic acid and an aromatic carboxylic acid.

Examples of the aliphatic monocarboxylic acid include caproic acid, enanthic acid, caprylic acid, pelargonic acid, isopelargonic acid, capric acid, caproleic acid, lauric acid (dodecanoic acid), undecanoic acid, linderic acid, tridecanoic acid, myristoleic acid, pentadecanoic acid, isopalmitic acid, palmitoleic acid, hiragonic acid, hydnocarpic acid, margaric acid, isostearic acid, elaidic acid, petroselinic acid, moroctic acid, eleostearic acid, tariric acid, vaccenic acid, ricinoleic acid, vernolic acid, sterculic acid, nonadecanoic acid, eicosanoic acid, stearic acid, 12-hydroxystearic acid, oleic acid, linoleic acid, linolenic acid, myristic acid, 2,2-bis(hydroxymethyl)propionic acid, and 2,2-bis(hydroxymethyl)butanoic acid.

Examples of the aromatic monocarboxylic acid include salicylic acid, p-hydroxyphenylacetic acid, benzoic acid, 2,3-dihydroxybenzoic acid, 2-quinolinecarboxylic acid, 3-hydroxybenzoic acid, p-anisic acid, picolinic acid, and 3-hydroxypicolinic acid.

Examples of the dicarboxylic acid include oxalic acid, citraconic acid, malonic acid, succinic acid, maleic acid, glutaric acid, diglycolic acid, adipic acid, suberic acid, sebacic acid, dodecanedioic acid, eicosanedioic acid, o-phthalic acid, m-phthalic acid (isophthalic acid), and p-phthalic acid (terephthalic acid).

Examples of the organic sulfonic acid include an aliphatic sulfonic acid and an aromatic sulfonic acid. Examples of the aliphatic sulfonic acid include an alkanesulfonic acid and an alkanolsulfonic acid.

Examples of the alkanesulfonic acid include methanesulfonic acid, ethanesulfonic acid, 1-propanesulfonic acid, 2-propanesulfonic acid, 1-butanesulfonic acid, 2-butanesulfonic acid, pentanesulfonic acid, hexanesulfonic acid, decanesulfonic acid, and dodecanesulfonic acid.

Examples of the alkanolsulfonic acid include 2-hydroxyethane-1-sulfonic acid, 2-hydroxypropane-1-sulfonic acid, 2-hydroxybutane-1-sulfonic acid, 2-hydroxypentane-1-sulfonic acid, 1-hydroxypropane-2-sulfonic acid, 3-hydroxypropane-1-sulfonic acid, 4-hydroxybutane-1-sulfonic acid, 2-hydroxyhexane-1-sulfonic acid, 2-hydroxydecane-1-sulfonic acid, and 2-hydroxydodecane-1-sulfonic acid.

Examples of the aromatic sulfonic acid include 1-naphthalenesulfonic acid, 2-naphthalenesulfonic acid, p-toluenesulfonic acid, xylenesulfonic acid, p-phenolsulfonic acid, cresolsulfonic acid, sulfosalicylic acid, nitrobenzenesulfonic acid, sulfobenzoic acid, and diphenylamine-4-sulfonic acid.

When an organic acid is used as the activator, one kind thereof may be used alone, or a combination of two or more kinds thereof may be used. Among the organic acids, a dicarboxylic acid is preferably used, an aliphatic dicarboxylic acid is more preferably used, and at least one selected from the group consisting of oxalic acid, adipic acid, sebacic acid, and eicosanedioic acid is still more preferably used.

The amount of the organic acid in the flux according to the present embodiment is preferably 15% by mass or less, more preferably 2% by mass or more and 12% by mass or less, and still more preferably 5% by mass or more and 10% by mass or less with respect to the total mass (100% by mass) of the above-described flux.

### <<Halogen compound>>

Examples of the halogen compound include an amine hydrohalic acid salt, and organic halogen compounds other than the amine hydrohalic acid salt.

An amine hydrohalic acid salt is a compound obtained by reacting an amine with a hydrogen halide. Examples of the amine herein include aliphatic amines, azoles, and guanidines. Examples of the hydrogen halide include hydrogen chloride, hydrogen bromide, and hydrogen iodide.

Examples of the aliphatic amines include ethylamine, diethylamine, triethylamine, and ethylenediamine.

Examples of the guanidines and azoles include those mentioned in the description of amine later.

Examples of the organic halogen compound other than the amine hydrohalic acid salt include halogenated aliphatic compounds. The halogenated aliphatic compound refers to a compound in which a part or all of hydrogen atoms constituting an aliphatic hydrocarbon group are substituted by a halogen atom.

Examples of the halogenated aliphatic compound include halogenated aliphatic alcohols and halogenated heterocyclic compounds.

When a halogen compound is used as the activator, one kind thereof may be used alone, or a combination of two or more kinds thereof may be used. Among the halogen compounds, a halogenated aliphatic compound may be used, and a halogenated aliphatic alcohol is preferably used. Examples of the halogenated aliphatic alcohol include 1-bromo-2-propanol, 3-bromo-1-propanol, 3-bromo-1,2-propanediol, 1-bromo-2-butanol, 1,3-dibromo-2-propanol, 2,3-dibromo-1-propanol, 1,4-dibromo-2-butanol, and trans-2,3-dibromo-2-butene-1,4-diol.

The amount of the halogen compound in the flux according to the present embodiment is preferably 5% by mass or less, more preferably 0.5% by mass or more and 4% by mass or less, and still more preferably 1% by mass or more and 2.5% by mass or less with respect to the total mass (100% by mass) of the above-described flux.

### <<Amine>>

Examples of the amine include a rosin amine, azoles, guanidines, an alkylamine compound, and an aminoalcohol compound.

Examples of the rosin amine include those mentioned in <Rosin> above.

Examples of the azoles include imidazole compounds such as 2-methylimidazole, 2-ethylimidazole, 2-undecylimidazole, 2-heptadecylimidazole, 1,2-dimethylimidazole, 2-ethyl-4-methylimidazole, 1-cyanoethyl-2-methylimidazole, 1-cyanoethyl-2-undecylimidazole, 1-cyanoethyl-2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-phenylimidazole, 1-cyanoethyl-2-undecylimidazolium trimellitate, 1-cyanoethyl-2-phenylimidazolium trimellitate, 1-dodecyl-2-methyl-3-benzylimidazolium chloride, 2-methylimidazoline, 2-phenylimidazoline, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine isocyanuric acid adduct, 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, epoxy-imidazole adduct, 2-methylbenzimidazole, 2-octylbenzimidazole, 2-pentylbenzimidazole, 2-(1-ethylpentyl)benzimidazole, 2-nonylbenzimidazole, 2-(4-thiazolyl)benzimidazole, and benzimidazole; triazole compounds such as 1,2,4-triazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], 6-(2-benzotriazolyl)-4-tert-octyl-6'-tert-butyl-4'-methyl-2,2'-methylenebisphenol, 1,2,3-benzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, 2,2'-[[(methyl-1H-benzotriazol-1-yl)methyl]imino]bisethanol, 1-(1',2'-dicarboxyethyl)benzotriazole, 1-(2,3-dicarboxypropyl)benzotriazole, 1-[(2-ethylhexylamino)methyl]benzotriazole, 2,6-bis[(1H-benzotriazol-1-yl)methyl]-4-methylphenol, and 5-methylbenzotriazole; triazine compounds such as 2,4-diamino-6-vinyl-s-triazine, 2,4-diamino-6-vinyl-s-triazine isocyanuric acid adduct, and 2,4-diamino-6-methacryloyloxyethyl-s-triazine; and tetrazole compounds such as 5-phenyltetrazole.

Examples of the guanidines include 1,3-diphenylguanidine, 1,3-di-o-tolylguanidine, 1-o-tolylbiguanide, 1,3-di-o-cumenylguanidine, and 1,3-di-o-cumenyl-2-propionylguanidine.

Examples of the alkylamine compound include ethylamine, triethylamine, ethylenediamine, triethylenetetramine, cyclohexylamine, hexadecylamine, and stearylamine.

Examples of the amino alcohol compound include alkanolamines such as 1-amino-2-propanol, and N,N,N',N'-tetrakis(2-hydroxypropyl)ethylenediamine.

When an amine is used as the activator, one kind thereof may be used alone, or a combination of two or more kinds thereof may be used.

Among the above, as the amine, it is preferable to use azoles. Among the azoles, in particular from the viewpoint of effectiveness as an accelerator for the curing reaction between the component (P) and at least one of the component (AA) and the rosin, it is preferable to use an imidazole compound; it is more preferable to use an alkylsubstituted imidazole compound such as 2-methylimidazole, 2-ethylimidazole, 2-undecylimidazole, 2-heptadecylimidazole, 1,2-dimethylimidazole, 2-ethyl-4-methylimidazole, 1-cyanoethyl-2-methylimidazole, 1-cyanoethyl-2-undecylimidazole, and 1-cyanoethyl-2-ethyl-4-methylimidazole; and among these, it is particularly preferable to use 2-ethylimidazole.

The amount of the amine in the flux according to the present embodiment is preferably 5% by mass or less, more preferably 0.1% by mass or more and 2% by mass or less, and still more preferably 0.2% by mass or more and 1% by mass or less with respect to the total mass (100% by mass) of the above-described flux.

### <Other components>

The flux according to the present embodiment may contain other components as necessary, in addition to the component (P), the component (AA), the rosin, the solvent, the thixotropic agent, and the activator described above.

Examples of the other components include a resin component other than the component (P) and the rosin, a metal deactivator, a surfactant, a silane coupling agent, an antioxidant, and a colorant.

### <<Resin component other than component (P) and rosin>>

Examples of the resin component other than the rosin-based resin include a terpene resin, a modified terpene resin, a terpene phenol resin, a modified terpene phenol resin, a styrene resin, a modified styrene resin, a xylene resin, a modified xylene resin, an acrylic resin, a polyethylene resin, and an acrylic-polyethylene copolymer resin.

Examples of the modified terpene resin include an aromatic modified terpene resin, a hydrogenated terpene resin, and a hydrogenated aromatic modified terpene resin. Examples of the modified terpene phenol resin include hydrogenated terpene phenol resins. Examples of the modified styrene resin include a styrene acrylic resin and a styrene maleic acid resin. Examples of the modified xylene resin include a phenol-modified xylene resin, an alkylphenol-modified xylene resin, a phenol-modified resoltype xylene resin, a polyol-modified xylene resin, and a polyoxyethylene-added xylene resin.

### <<Metal deactivator>>

Examples of the metal deactivator include hindered phenolic compounds and nitrogen compounds.

The term "metal deactivator" herein refers to a compound having a capacity to prevent metal from deteriorating due to contact with a certain type of compound.

The hindered phenolic compound refers to a phenolic compound having a bulky substituent (for example, a branched or cyclic alkyl group such as a t-butyl group) on at least one of the ortho positions of phenol.

Examples of the nitrogen compound in the metal deactivator include hydrazidebased nitrogen compounds, amide-based nitrogen compounds, triazole-based nitrogen compounds, and melamine-based nitrogen compounds.

### <<Surfactant>>

Examples of the surfactant include nonionic surfactants and cationic surfactants. Examples of the nonionic surfactant include an aliphatic alcohol polyoxyethylene adduct, an aromatic alcohol polyoxyethylene adduct, a polyhydric alcohol polyoxyethylene adduct, an aliphatic alcohol polyoxypropylene adduct, an aromatic alcohol polyoxypropylene adduct, and a polyhydric alcohol polyoxypropylene adduct. Examples of the cationic surfactant include a terminal diamine polyethylene glycol, a terminal diamine polyethylene glycol-polypropylene glycol copolymer, an aliphatic amine polyoxyethylene adduct, an aromatic amine polyoxyethylene adduct, a polyvalent amine polyoxyethylene adduct, and a polyvalent amine polyoxypropylene adduct.

### [Method for preparing flux]

The flux according to the present embodiment can be prepared by mixing the epoxy resin having an oxyalkylene group (component (P)), at least one acid anhydride selected from the group consisting of succinic anhydride and derivatives thereof (component (AA)), the rosin, the solvent, the thixotropic agent, and the activator.

Among these components, with regard to the component (P), the component (AA), and the rosin, upon heating, the epoxy group of the component (P) can react with at least one of the carboxy group of the component (AA) generated by hydrolysis and the carboxy group of the rosin to form a reaction product (X).

The reaction product (X) has a structural unit (P') derived from the component (P), and at least one structural unit of a structural unit (AA') derived from the component (AA) and a structural unit (rosin') derived from the rosin.

That is, another embodiment of the flux according to the first aspect contains a reaction product (X) of at least one selected from the group consisting of succinic anhydride, derivatives of succinic anhydride, and a rosin, with an epoxy resin having an oxyalkylene group, and a solvent, a thixotropic agent, and an activator.

The above-described reaction product (X) may be one formed during preparation of the flux (for example, when all components of the formulation are mixed together), or may be one obtained by previously reacting the component (P) with at least one of the component (AA) and the rosin.

However, even in the latter case where the reaction product (X) is prepared by previously reacting the components, unreacted component (P), unreacted component (AA), or unreacted rosin may remain in the reaction solution, and such unreacted materials usually remain.

For example, the flux according to another embodiment includes those further containing, in addition to the reaction product (X), the solvent, the thixotropic agent, and the activator described above, at least one acid selected from the group consisting of succinic acid and derivatives thereof, or an acid anhydride thereof. Alternatively, the flux according to another embodiment includes those further containing a rosin, in addition to the reaction product (X), the solvent, the thixotropic agent, and the activator described above. Alternatively, the flux according to another embodiment includes those further containing, in addition to the reaction product (X), the solvent, the thixotropic agent, and the activator described above, at least one acid selected from the group consisting of succinic acid and derivatives thereof, or an acid anhydride thereof, and a rosin.

A method of reacting the component (P) with at least one of the component (AA) and the rosin is not particularly limited. A reaction temperature is preferably 100°C to 250°C, and a reaction time is preferably 5 minutes to 30 minutes.

In the reaction of the component (P) with at least one of the component (AA) and the rosin, from the viewpoints of solderability in an air atmosphere and suppression of polymerization of the component (P) and the component (AA), a mixing ratio of the component (P), the component (AA), and the rosin is preferably such that a mass ratio of the component (P) is 0.25 or more and 0.8 or less when the rosin is set to 1. Alternatively, a mass ratio of the component (AA) is preferably more than 0.04 and less than 0.2 when the rosin is set to 1.

In this case, an amount of the rosin formulated is preferably 10% by mass or more, more preferably 10% by mass or more and 32.5% by mass or less, and still more preferably 15% by mass or more and 25% by mass or less with respect to the total mass (100% by mass) of all formulated components constituting the flux.

The formation of the reaction product (X) can be confirmed from the fact that an amount of each component formulated (amount charged) during the preparation of the flux is different from an amount of the (unreacted) component quantified in the flux after the preparation.

In the preparation of the flux, as an example, regarding the component (P), a difference between an amount formulated (amount charged) during the preparation of the flux and an amount in the flux after the preparation is consumed in the formation of the reaction product (X). As another example, regarding the component (AA), a difference between the amount formulated (amount charged) during the preparation of the flux and the amount in the flux after the preparation is consumed in the formation of the reaction product (X). As another example, regarding the rosin, a difference between an amount formulated (amount charged) during the preparation of the flux and the amount in the flux after the preparation is consumed in the formation of the reaction product (X).

For example, as the flux containing the reaction product (X), a flux having a particularly large difference between an amount formulated (amount charged) during the preparation of the flux and the amount in the flux after the preparation regarding the component (P) is an exemplary example. A flux in which almost the entire amount of the component (P) formulated (amount charged) is consumed in the formation of the reaction product (X) is also an exemplary example.

The amount of the component (P) in the flux after the preparation can be quantified by performing liquid chromatography/Fourier transform mass spectrometry (LC/FTMS) on a sample extracted from the flux.

The amounts of the component (AA) and the rosin in the flux after the preparation can be quantified by performing gas chromatography/mass spectrometry (GC/MS) on a sample extracted from the flux.

In the flux containing the reaction product (X) according to another embodiment, with respect to the total mass (100% by mass) of the flux, the amount of the reaction product (X) is, for example, 1% by mass or more and 20% by mass or less; the amount of the component (P) is, for example, 0% by mass or more and 5% by mass or less; the total amount of at least one acid selected from the group consisting of succinic acid and derivatives thereof, and an acid anhydride thereof is, for example, 0.1 % by mass or more and 4.5% by mass or less; the amount of the rosin is, for example, 7% by mass or more and 30% by mass or less; the amount of the solvent is the balance, and is, for example, 20% by mass or more and 70% by mass or less; the amount of the thixotropic agent is, for example, 2% by mass or more and 15% by mass or less; and the amount of the activator is, for example, 2.5% by mass or more and 25% by mass or less.

In the latter case where the reaction product (X) is prepared by previously reacting the components, the flux containing the reaction product (X) can be prepared, after completion of the reaction of the component (P) with at least one of the component (AA) and the rosin, by mixing the solvent, the thixotropic agent, the activator, and as necessary other components into the reaction solution without purifying the reaction product (X).

Alternatively, the flux containing the reaction product (X) can also be prepared by using an imidazole compound (preferably an alkyl group-substituted imidazole compound, and particularly preferably 2-ethylimidazole) in combination as an accelerator for the curing reaction when reacting the component (P) with at least one of the component (AA) and the rosin in advance.

As described above, in the flux according to the present embodiment, the epoxy resin having an oxyalkylene group (component (P)) and at least one acid anhydride selected from the group consisting of succinic anhydride and derivatives thereof (component (AA)) are used in combination, in addition to the rosin, the solvent, the thixotropic agent, and the activator. By adopting such a combination of the component (P) and the component (AA), although the reason is not clear, it is possible to provide a flux capable of suppressing occurrence of cracking of flux residue due to temperature changes even in the case of air reflow soldering.

In the flux according to the present embodiment, by controlling the mixing ratio of the rosin to the component (AA), or by controlling the mixing ratio of the rosin to the component (P), it is possible to easily achieve both suppression of occurrence of cracking of flux residue due to temperature changes and reduction of tackiness of the flux residue.

### (Solder paste)

One embodiment of a solder paste according to a second aspect contains a solder alloy powder and the flux according to the above-described embodiment. Such a solder paste can be prepared by mixing the solder alloy powder and the flux according to the above-described embodiment by a known method.

As a solder alloy constituting the solder alloy powder, a solder alloy having a known composition can be used.

The solder alloy may be an Sn simple substance solder, may be an Sn-Ag-based solder alloy, an Sn-Cu-based solder alloy, an Sn-Ag-Cu-based solder alloy, an Sn-Bi-based solder alloy, an Sn-In-based solder alloy, or the like, or may be a solder alloy obtained by adding Sb, Bi, In, Cu, Zn, As, Ag, Cd, Fe, Ni, Co, Au, Ge, P, or the like to these alloys.

The solder alloy may be an Sn-Pb-based solder alloy or a solder alloy obtained by adding Sb, Bi, In, Cu, Zn, As, Ag, Cd, Fe, Ni, Co, Au, Ge, P, or the like to an Sn-Pb-based solder alloy.

The solder alloy is preferably a solder alloy not containing Pb, and more preferably composed of a solder alloy containing Sn, Ag, and Cu.

Soldering conditions in the soldering step may be appropriately set according to a melting point of the solder alloy. For example, when an Sn-Ag-Cu-based solder alloy is used, a temperature of the molten solder is preferably 230°C to 280°C, and more preferably 240°C to 260°C. Alternatively, in the case where an Sn-Bi-based solder alloy (solder alloy containing Sn and Bi) is used, the temperature of the molten solder is preferably 170°C to 220°C and more preferably 180°C to 200°C.

### Amount of flux:

The amount of the flux in the solder paste according to the present embodiment is preferably 5% to 30% by mass, and more preferably 5% to 15% by mass with respect to the total mass of the solder paste.

With the solder paste according to the present embodiment described above, since the flux according to the above-described embodiment is used, occurrence of cracking of flux residue due to temperature changes is suppressed in the case of air reflow soldering, durability of the solder joint is improved, and stabilization of operation of an apparatus provided with the bonded body is achieved.

### (Method for producing bonded body)

One embodiment of a method for producing a bonded body according to a third aspect is a method including a step of obtaining a bonded body by soldering a component and a substrate. In such a method for producing a bonded body, during the soldering, reflow is performed under an air atmosphere using the solder paste according to the above-described second aspect.

Hereinafter, an embodiment of the method for producing a bonded body will be described.

The method for producing a bonded body according to the present embodiment is a method including a solder paste application step, a component mounting step, and a reflow step in this order.

### [Solder paste application step]

**In** the solder paste application step, the solder paste according to the second aspect is applied onto a surface of a substrate.

Examples of the substrate include a printed wiring board and a wafer.

Examples of a method of applying the solder paste include a method of printing the solder paste using a mask having an opening, a method of dispensing the solder paste using a dispenser or the like, and a method of transferring the solder paste using a probe pin or the like.

### [Component mounting step]

**In** the component mounting step, a component is mounted on the substrate to which the solder paste has been applied.

Examples of the component include a chip, an integrated circuit, a transistor, a diode, a resistor, and a capacitor.

### [Reflow step]

The reflow step includes at least an operation of performing reflow under an air atmosphere (air reflow). Generally, the "air reflow" means performing soldering in heated air (approximately 80 vol% of nitrogen and approximately 20 vol% of oxygen).

In the reflow step, in a reflow furnace, the inside of the furnace is heated under an air atmosphere, and the substrate after component mounting is heated at a temperature higher than the melting point of the solder powder contained in the solder paste (that is, peak temperature) (this is referred to as a main heating step).

The heating temperature may be, for example, the temperature higher than the melting point of the solder powder by 5°C to 30°C. The heating time may be, for example, 30 seconds to 3 minutes.

The reflow step may include a preheating step before the main heating step.

In the preheating step, the substrate after component mounting is heated in the reflow furnace at a temperature lower than the melting point of the solder powder contained in the solder paste. The heating temperature may be, for example, 150°C to 180°C. The heating time may be, for example, 1 minute to 5 minutes.

With the method for producing a bonded body according to the present embodiment described above, since the solder paste containing the flux according to the present embodiment described above is employed, in the bonded body to be produced, occurrence of cracking of flux residue due to temperature changes is suppressed even in the case of air reflow soldering.

In addition, with the method for producing a bonded body according to the present embodiment, since the reflow can be stably performed under an air atmosphere, it can contribute to a reduction in nitrogen usage and the like.

### Examples

Hereinafter, the present invention will be described with reference to Examples, but the present invention is not limited to Examples.

### <Preparation of flux>

### (Examples 1 to 105 and Comparative Examples 1 to 9)

Each flux of Examples and Comparative Examples was prepared with formulations shown in Tables 1 to 13.

Preparation of each flux was performed as follows. That is, all components were charged into a stainless steel can, the temperature was raised to approximately 200°C while stirring, and heated for 5 minutes to be uniformly dissolved. Thereafter, cooling was carried out for 24 hours to obtain a flux.

In the tables, the amount of each raw material indicates a proportion (% by mass) with respect to the total mass (100% by mass) of the flux. Raw materials used are described below.

### · Epoxy resin

Polyethylene glycol diglycidyl ether
Trade name "DENACOL EX-850" manufactured by Nagase ChemteX Corporation; in General Formula (P1), R¹⁰ is a glycidyl group, R¹¹ is an ethylene group (-CH₂CH₂-), and n1 is 2; epoxy equivalent: 122 (g/eq)
Trade name "DENACOL EX-841" manufactured by Nagase ChemteX Corporation; in General Formula (P1), R¹⁰ is a glycidyl group, R¹¹ is an ethylene group (-CH₂CH₂-), and n1 is 13; epoxy equivalent: 372 (g/eq)
Trade name "DENACOL EX-861 " manufactured by Nagase ChemteX Corporation; in General Formula (P1), R¹⁰ is a glycidyl group, R¹¹ is an ethylene group (-CH₂CH₂-), and n1 is 22; epoxy equivalent: 551 (g/eq)
Polypropylene glycol diglycidyl ether
Trade name "DENACOL EX-920" manufactured by Nagase ChemteX Corporation; in General Formula (P1), R¹⁰ is a glycidyl group, R¹¹ is a propylene group (-CH(CH₃)-CH₂-), and n1 is 3; epoxy equivalent: 176 (g/eq)
Trade name "DENACOL EX-931" manufactured by Nagase ChemteX Corporation, in General Formula (P1), R¹⁰ is a glycidyl group, R¹¹ is a propylene group (-CH(CH₃)-CH₂-), and n1 is 11; epoxy equivalent: 471 (g/eq)
Propylene oxide-modified bisphenol A-type epoxy resin
Trade name "EP-4000S" manufactured by ADEKA CORPORATION; in General Formula (P2), R²⁰ is a glycidyl group, R²¹ and R²² are each a methyl group, and R²³ is a propylene group (-CH₂-CH(CH₃)- or -CH(CH₃)-CH₂-); epoxy equivalent: 260 (g/eq)
Trade name "AER9000" manufactured by Asahi Kasei Corporation; in General Formula (P2), R²⁰ is a glycidyl group, R²¹ and R²² are each a methyl group, and R²³ is a propylene group (-CH₂-CH(CH₃)- or -CH(CH₃)-CH₂-); epoxy equivalent: 380 (g/eq)
1,6-Hexanediol diglycidyl ether
Trade name "DENACOL EX-212" manufactured by Nagase ChemteX Corporation; epoxy equivalent: 151 (g/eq)
Bisphenol A-type epoxy resin
Trade name "EPICLON 840" manufactured by DIC Corporation; epoxy equivalent: 180 (g/eq)
Fatty acid polycarboxylic acid glycidyl ester mixture
Trade name "IPU-22G" manufactured by Okamura Oil Mill Co., Ltd.; 8,13-dimethyl-8,12-eicosadienedioic acid bis(2,3-epoxypropyl) ester (70% or more), CAS Number 78352-82-6; epoxy equivalent: 240 (g/eq)

### · Polybutadiene

Hydroxyl-terminated liquid polybutadiene
Trade name "Poly bd R-15HT" manufactured by Idemitsu Kosan Co.,Ltd.

### · Acid anhydride

Succinic anhydride or derivative thereof
Allylsuccinic anhydride
In General Formula (AA-1), R⁰¹ is -CH₂CH=CH₂ and R⁰² is a hydrogen atom
2-Buten-1-ylsuccinic anhydride
In General Formula (AA-1), R⁰¹ is -CH₂CH=CHCH₃ and R⁰² is a hydrogen atom
2-Octenylsuccinic anhydride
In General Formula (AA-1), R⁰¹ is -CH₂CH=CH(CH₂)₄CH₃ and R⁰² is a hydrogen atom
Tetrapropenylsuccinic anhydride
In General Formula (AA-1), R⁰¹ is -C₁₂H₂₃ and R⁰² is a hydrogen atom
Isooctadecenylsuccinic anhydride
In General Formula (AA-1), R⁰¹ is -C₁₈H₃₅ and R⁰² is a hydrogen atom
Butylsuccinic anhydride (melting point: 46°C)
In General Formula (AA-1), R⁰¹ is -(CH₂)₃CH₃ and R⁰² is a hydrogen atom
n-Octylsuccinic anhydride (melting point: 65°C)
In General Formula (AA-1), R⁰¹ is -(CH₂)₇CH₃ and R⁰² is a hydrogen atom
Succinic anhydride (melting point: 120°C)
In General Formula (AA-1), R⁰¹ is a hydrogen atom and R⁰² is a hydrogen atom
Maleic anhydride (melting point: 54°C)
Phthalic anhydride (melting point: 131°C)
Aliphatic polycarboxylic acid polyanhydride mixture
Trade name "IPU-22AH" manufactured by Okamura Oil Mill Co., Ltd.; a polyanhydride of an aliphatic polycarboxylic acid mixture (70% or more of isodocosadienedioic acid); main substance name: 8,13-dimethyl-8,12-eicosadienedioic acid homopolymer; CAS Number 86851-05-0

### · Rosin

An acrylic acid-modified hydrogenated rosin, a polymerized rosin, and a hydrogenated rosin were used.

### · Solvent

Diethylene glycol monohexyl ether (HeDG) and triethylene glycol monomethyl ether (methyl triglycol (MTG)) were used.

### · Thixotropic agent

A polyamide (saturated fatty acid polyamide, melting point of 200°C or lower) and a hydrogenated castor oil were used.

### · Activator

### Organic acid

As a dicarboxylic acid, oxalic acid, adipic acid, sebacic acid, and eicosanedioic acid were used; a hydrogenated dimer acid was used as a dimer acid.

Trans-2,3-dibromo-2-butene-1,4-diol was used as a halogen compound.

2-Ethylimidazole was used as an imidazole compound.

### <Preparation of solder paste>

Solder pastes were prepared by mixing each of the fluxes of Examples and Comparative Examples described above with the following solder alloy powder. In each of the prepared solder pastes, the flux was 11% by mass and the solder alloy powder was 89% by mass.

Solder alloy powder: powder composed of a solder alloy of 0.5% by mass of Cu, 3.0% by mass of Ag, and a balance of Sn. A solidus temperature of the solder alloy was 217°C, and a liquidus temperature thereof was 220°C. The above-described solder alloy powder had a size (particle size distribution) satisfying symbol 4 in the powder size classification (Table 2) in JIS Z 3284-1:2014.

### <Evaluation>

Evaluation of solderability, evaluation of capability of preventing cracking of flux residue, and evaluation of capability of preventing tackiness of flux residue were performed as shown below. These evaluation results are shown in Tables 1 to 13.

### [Evaluation of solderability]

After printing the solder paste on a Cu land, reflow (air reflow) was carried out under an air atmosphere. After the reflow, a molten state of solder on each of 64 Cu lands was confirmed, and the number of Cu lands where unmelting or partial unmelting occurred was counted. Based on the following determination criteria, the solderability was evaluated.

In such evaluation, an opening was set to a diameter of 0.30 mm, and a mask thickness was set to 0.15 mm. As reflow conditions (reflow profile), preheating was set to 150°C to 180°C for 90 seconds, a peak temperature was set to 240°C, and a solder melting time was set to 40 seconds. The reflow profile is shown in FIG. 1.

### Determination criteria

A: the number of Cu lands where unmelting or partial unmelting occurred was 15 or less.
B: the number of Cu lands where unmelting or partial unmelting occurred was 16 to 32.
C: the number of Cu lands where unmelting or partial unmelting occurred was 33 or more.

### [Evaluation of capability of preventing cracking of flux residue]

A printed circuit board (material: FR-4, thickness 1.0 mm, land dimension 1.5 mm x 0.25 mm, pitch 0.5 mm, width between lands 0.25 mm, number of lands 64) was prepared. The prepared solder paste was printed on the above-described printed circuit board using a metal mask having a thickness of 150 µm.

Next, using the printed circuit board after the printing, reflow soldering (air reflow) was carried out under an air atmosphere to obtain a test substrate. The reflow conditions (reflow profile) are the same as those in [Evaluation of solderability] described above (FIG. 1).

Next, each of the obtained test substrates was placed in a heat cycle test apparatus and subjected to 1,000 cycles, wherein one cycle was consisting of standing at a low temperature (-40°C) and at a high temperature (85°C). In the cycle, the standing times at the low temperature and the high temperature were each set to 30 minutes, and the time for one cycle was set to 70 minutes. After carrying out 1,000 cycles, cracks in the flux residue were observed, and the capability of preventing cracking of flux residue was evaluated based on the following determination criteria.

### Determination criteria

A: no crack even after 1,000 cycles
B: no crack until after 500 cycles
C: crack within 0.125 mm was generated after 500 cycles
D: transversing crack was generated after 500 cycles

### [Evaluation of capability of preventing tackiness of flux residue]

After printing the flux on the Cu land of the substrate, reflow was carried out under a nitrogen atmosphere (oxygen concentration of 3,000 ppm). After the reflow, the substrate was stored at a temperature of 25°C and a relative humidity of 50%.

The flux residue on the substrate after the storage was touched with a finger to confirm tackiness. Based on the following determination criteria, the capability of preventing tackiness of flux residue was evaluated.

In such evaluation, an opening was set to a diameter of 6.5 mm, and a mask thickness was set to 0.15 mm. The reflow conditions (reflow profile) are the same as those in [Evaluation of solderability] described above (FIG. 1), except for being under a nitrogen atmosphere.

As the reflow conditions in the evaluation of capability of preventing tackiness of flux residue, the conditions were set to carry out the reflow under a nitrogen atmosphere, because tackiness of the flux residue is more likely to occur when the reflow is carried out under a nitrogen atmosphere than when the reflow is carried out under an air atmosphere.

### Determination criteria

A: no tackiness in the flux residue within 1 day after soldering
B: no tackiness in the flux residue within 3 days after soldering
C: no tackiness in the flux residue within 7 days after soldering
D: tackiness in the flux residue even after 7 days elapsed after soldering

**[Table 1]**

| Flux | | | Comparative Example 1 | Comparative Example 2 | Example 1 |
|---|---|---|---|---|---|
| Epoxy resin | Propylene oxide-modified bisphenol A-type epoxy resin | AER9000 | 0 | 15 | 15 |
| Acid anhydride | Succinic anhydride or derivative thereof | 2-Octenylsuccinic anhydride | 1 | 0 | 1 |
| Rosin | Acrylic acid-modified hydrogenated rosin | | 20 | 20 | 20 |
| Solvent | Diethylene glycol monohexyl ether (HeDG) | | 29.5 | 15.5 | 14.5 |
| | Triethylene glycol monomethyl ether (methyl triglycol (MTG)) | | 20 | 20 | 20 |
| Thixotropic agent | Polyamide | | 7 | 7 | 7 |
| | Hydrogenated castor oil | | 0.5 | 0.5 | 0.5 |
| Activator | Organic acid | Adipic acid | 5 | 5 | 5 |
| | | Eicosanedioic acid | 5 | 5 | 5 |
| | | Hydrogenated dimer acid | 10 | 10 | 10 |
| | Halogen compound | Trans-2,3-dibromo-2-butene-1,4-diol | 1.5 | 1.5 | 1.5 |
| | Imidazole compound | 2-Ethylimidazole | 0.5 | 0.5 | 0.5 |
| Total/% by mass | | | 100 | 100 | 100 |
| Rosin/acid anhydride, mass ratio | | | 20 | - | 20 |
| Rosin/epoxy resin, mass ratio | | | - | 1.33 | 1.33 |
| Evaluation | Solderability | | A | A | A |
| | Capability of preventing cracking of flux residue | | D | D | C |
| | Capability of preventing tackiness of flux residue | | - | - | B |

**[Table 2]**

| Flux | | | Example 2 | Example 3 | Example 4 | Example 5 | Example 6 | Example 7 | Example 8 | Comparative Example 3 | Comparative Example 4 |
|---|---|---|---|---|---|---|---|---|---|---|---|
| Epoxy resin | Polyethylene glycol diglycidyl ether | DENACOL EX-850 | 12 | | | | | | | | |
| | | DENACOL EX-841 | | 12 | | | | | | | |
| | | DENACOL EX-861 | | | 12 | | | | | | |
| | Polypropylene glycol diglycidyl ether | DENACOL EX-920 | | | | 12 | | | | | |
| | | DENACOL EX-931 | | | | | 12 | | | | |
| | Propylene oxide-modified bisphenol A-type epoxy resin | EP-4000S | | | | | | 12 | | | |
| | | AER9000 | | | | | | | 12 | | |
| | 1,6-Hexanediol diglycidyl ether | DENACOL EX-212 | | | | | | | | 12 | |
| | Bisphenol A-type epoxy resin | EPICLON 840 | | | | | | | | | 12 |
| Acid anhydride | Succinic anhydride or derivative thereof | 2-Octenylsuccinic anhydride | 3 | 3 | 3 | 3 | 3 | 3 | 3 | 3 | 3 |
| Rosin | Acrylic acid-modified hydrogenated rosin | | 20 | 20 | 20 | 20 | 20 | 20 | 20 | 20 | 20 |
| Solvent | Diethylene glycol monohexyl ether (HcDG) | | 15.5 | 15.5 | 15.5 | 15.5 | 15.5 | 15.5 | 15.5 | 15.5 | 15.5 |
| | Triethylene glycol monomethyl ether (methyl triglycol (MTG)) | | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 |
| | llydrogenated castor oil | | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 |
| | | Eicosanedioic acid | 5 | 5 | 5 | 5 | 5 | 5 | 5 | 5 | 5 |
| | | Hydrogenated dimer acid | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 |
| Rosin/acid anhydride, mass ratic | | | 6.67 | 6.67 | 6.67 | 6.67 | 6.67 | 6.67 | 6.67 | 6.67 | 6.67 |
| Rosin/epoxy resin, mass ratic | | | 1.67 | 1.67 | 1.67 | 1.67 | 1.67 | 1.67 | 1.67 | 1.67 | 1.67 |
| Evaluation | Solderability | | A | A | A | A | A | A | A | A | A |
| | Capability of preventing cracking of flux residue | | C | B | B | B | B | A | A | D | D |
| | Capability of preventing tackiness of flux residue | | C | C | C | C | C | C | C | A | A |

**[Table 3]**

| Flux | | | Example 9 | Example 10 | Example 11 | Example 12 |
|---|---|---|---|---|---|---|
| Epoxy resin | Polyethylene glycol diglycidyl ether | DENACOL EX-850 | | | | |
| | | DENACOL EX-841 | 4 | 6 | | |
| | | DENACOL EX-861 | 4 | | | |
| | Polypropylene glycol diglycidyl ether | DENACOL EX-920 | 4 | | 6 | |
| | | DENACOL EX-931 | | | | |
| | Propylene oxide-modified bisphenol A-type epoxy resin | EP-4000S | | | | |
| | | AER9000 | | 6 | 6 | 10 |
| | 1,6-Hexanediol diglycidyl ether | DENACOL EX-212 | | | | |
| | Bisphenol A-type epoxy resin | EPICLON 840 | | | | 2 |
| Acid anhydride | Succinic anhydride or derivative thereof | 2-Octenylsuccinic anhydride | 3 | 3 | 3 | 3 |
| Rosin | Acrylic acid-modified hydrogenated rosin | | 20 | 20 | 20 | 20 |
| Solvent | Diethylene glycol monohexyl ether (HeDG) | | 15.5 | 15.5 | 15.5 | 15.5 |
| | Triethylene glycol monomethyl ether (methyl triglycol (MTG)) | | 20 | 20 | 20 | 20 |
| Thixotropic agent | Polyamide | | 7 | 7 | 7 | 7 |
| | Ilydrogenated castor oil | | 0.5 | 0.5 | 0.5 | 0.5 |
| Activator | Organic acid | Adipic acid | 5 | 5 | 5 | 5 |
| | | Eicosancdioic acid | 5 | 5 | 5 | 5 |
| | | Hydrogenated dimer acid | 10 | 10 | 10 | 10 |
| | Halogen compound | Trans-2,3-dibromo-2-butene-1,4-diol | 1.5 | 1.5 | 1.5 | 1.5 |
| | Imidazole compound | 2-Ethylimidazole | 0.5 | 0.5 | 0.5 | 0.5 |
| Total/% by mass | | | 100 | 100 | 100 | 100 |
| Rosin/acid anhydride, mass ratio | | | 667 | 6.67 | 6.67 | 6.67 |
| Rosin/epoxy resin, mass ratio | | | 1.67 | 1.67 | 1.67 | 1.67 |
| Evaluation | Solderability | | A | A | A | A |
| | Capability of preventing cracking of flux residue | | B | B | B | B |
| | Capability of preventing tackiness of flux residue | | C | C | C | C |

**[Table 4]**

| Flux | | | Example 13 | Example 14 | Example 8 | Example 15 | Examplc 16 | Example 17 | Example 18 | Example 19 | Comparative Example 5 | Comparative Example 6 |
|---|---|---|---|---|---|---|---|---|---|---|---|---|
| Epoxy resin | Propylene oxide-modified bisphenol A-type epoxy resin | AER9000 | 12 | 12 | 12 | 12 | 12 | 12 | 12 | 12 | 12 | 12 |
| Acid anhydride | Succinic anhydride or derivative thereof | Allylsuccinic anhydride | 3 | | | | | | | | | |
| | | 2-Buten-1-ylsuccinic anhydride | | 3 | | | | | | | | |
| | | 2-Octenylsuccinic anhydride | | | 3 | | | | | | | |
| | | Tetrapropenylsuccinic anhydride | | | | 3 | | | | | | |
| | | Isooctadecenylsuccinic anhydride | | | | | 3 | | | | | |
| | | Butylsuccinic anhydride | | | | | | 3 | | | | |
| | | n-Octylsuccinic anhydride | | | | | | | 3 | | | |
| | | Succinic anhydride | | | | | | | | 3 | | |
| | Maleic anhydride | | | | | | | | | | 3 | |
| | Phthalic anhydride | | | | | | | | | | | 3 |
| Rosin | Acrylic acid-modified hydrogenated rosin | | 20 | 20 | 20 | 20 | 20 | 20 | 20 | 20 | 20 | 20 |
| Solvent | Diethylene glycol monohexyl ether (HeDG) | | 15.5 | 15.5 | 15.5 | 15.5 | 15.5 | 15.5 | 15.5 | 15.5 | 15.5 | 15.5 |
| | Triethylene glycol monomethyl ether (methyl triglycol (MTG)) | | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 |
| | llydrogenated castor oil | | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 |
| | | Eicosancdioic acid | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 |
| Rosin/acid anhydride, mass ratio | | | 6.67 | 6.67 | 6.67 | 6.67 | 6.67 | 6.67 | 6.67 | 6.67 | 6.67 | 6.67 |
| Rosin/epoxy resin, mass ratio | | | 1.67 | 1.67 | 1.67 | 1.67 | 1.67 | 1.67 | 1.67 | 1.67 | 1.67 | 1.67 |
| Evaluation | Solderability | | A | A | A | A | A | A | A | A | A | A |
| | Capability of preventing cracking of flux residue | | A | A | A | A | A | B | B | C | D | D |
| | Capability of preventing tackiness of flux residue | | C | C | C | C | C | C | C | C | A | A |

**[Table 5]**

| Flux | | | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Epoxy resin | Propylene sxide-modified bisphenol A-type epoxy resin | AER9000 | 12 | 12 | 12 | 12 | 12 | 12 | 12 | 12 | 12 | 12 | 12 |
| Acid anhydride | Succinic anhydride or derivative thereof | 2-Octenylsuccinic anhydride | 3 | 3 | 3 | 3 | 3 | 3 | 3 | 3 | 3 | 3 | 3 |
| Rosin | Acrylic acid-modified hydrogenated osin | | | 10 | 10 | 20 | 20 | 20 | 20 | 20 | 20 | 20 | 20 |
| | Polymerized rosin | | 20 | 10 | | | | | | | | | |
| | llydrogenated rosin | | | | 10 | | | | | | | | |
| Solvent | Diethylene glycol monohexyl ether (IleDG) | | *15.5* | *15.5* | 15.5 | 25.5 | 20.5 | 15.5 | 15.5 | 15.5 | 25.5 | 20.5 | 12 |
| | Triethylene glycol monomethyl ether (methyl triglycol (MTG)) | | 20 | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 | 7 |
| | Hydrogenated castor oil | | 0.5 | 0.5 | 0.5 | 0.5 | 0.5 | 0.5 | 0.5 | 0.5 | 0.5 | 0.5 | 0.5 |
| Activator | Organic acid | Oxalic acid | | | | | | | 5 | | | | |
| | | Adipic acid | 5 | 5 | 5 | 0 | 5 | 10 | | | 5 | 5 | 5 |
| | | Sebacic acid | | | | | | | | 5 | | | |
| | | Eicosanedioic acid | 5 | 5 | 5 | | | | 5 | 5 | 5 | 5 | 5 |
| | | Hydrogenated dimer acid | 10 | 10 | 10 | 10 | 10 | 10 | 10 | 10 | 0 | 5 | 15 |
| | Halogen compound | Trans-2,3-dibromo-2-butene-1,A-diol | 1.5 | 1.5 | 1.5 | 1.5 | 1.5 | 1.5 | 1.5 | 1.5 | 1.5 | 1.5 | 0 |
| | Imidazole compound | 2-Ethylimidazole | 0.5 | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 | 100 |
| Rosin/acid anhydride, mass ratio | | | 6.67 | 6.67 | 6.67 | 6.67 | 6.67 | 6.67 | 6.67 | 6.67 | 6.67 | 6.67 | 6.67 |
| Rosin/epoxy resin, mass ratic | | | 1.67 | 1.67 | 1.67 | 1.67 | 1.67 | 1.67 | 1.67 | 1.67 | 1.67 | 1.67 | 1.67 |
| Evaluation | Solderability | | A | A | A | C | B | A | A | A | C | B | B |
| | Capability of preventing cracking of flux residue | | A | A | A | A | A | A | A | A | A | A | A |
| | Capability of preventing tackiness of flux residue | | C | C | C | C | C | C | C | C | C | C | C |

**[Table 6]**

| Flux | | | Example 31 | Example 32 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|
| Epoxy resin | Propylene oxide-modified bisphenol A-type epoxy resin | AER9000 | 3 | 3 | 4 | 4 | 4 | 4 | 5 | 5 | 5 | 5 | 6 | 6 |
| Acid anhydride | Succinic anhydride or derivative thereof | 2 Octenylsuccinic anhydride | 0.5 | 1.5 | 0.5 | 1.5 | 1 | 2 | 1 | 2 | 1 | 3 | 1 | 3 |
| Rosin | Acrylic acid-modified hydrogenated rosin | | 10 | 10 | 10 | 10 | 15 | 15 | 15 | 15 | 20 | 20 | 20 | 20 |
| Solvent | Diethylene glycol monohexyl ether (HeDG) | | 37 | 36 | 36 | 35 | 30.5 | 29.5 | 29.5 | 28.5 | 24.5 | 22.5 | 23.5 | 21.5 |
| | Triethylene glycol monomethyl ether (methyl triglycol MTG)) | | 20 | 20 | 20 | 20 | 20 | 20 | 20 | 20 | 20 | 20 | 20 | 20 |
| Thixotropic | Polyamide | | 7 | 7 | 7 | 7 | 7 | 7 | 7 | 7 | 7 | 7 | 7 | 7 |
| agent | Hydrogenated castor oil | | 0.5 | 0.5 | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 | 5 | 5 |
| | | Eicosanedioic acid | 5 | 5 | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 | 100 | 100 |
| Rosin/acid anhydride, mass ratic | | | 20.00 | 6.67 | 20.00 | 6.67 | 15.00 | 7.50 | 15.00 | 7.50 | 20.00 | 6.67 | 20.00 | 6.67 |
| Rosin/epoxy resin, mass ratio | | | 3.33 | 3.33 | 2.50 | 2.50 | 3.75 | 3.75 | 3.00 | 3.00 | 4.00 | 4.00 | 3.33 | 3.33 |
| Evaluation | Solderability | | B | B | B | B | A | A | A | A | A | A | A | A |
| | Capability of preventing cracking of flux residue | | C | B | C | A | B | B | B | B | C | B | C | B |
| | Capability of preventing tackiness of flux residue | | A | C | B | C | A | B | A | B | A | C | A | C |

**[Table 7]**

| Flux | | | Example 43 | Example 44 | Example 45 | Example 46 | Example 47 | Example 48 | Example 49 | Example 50 | Example 51 | Example 52 | Example 53 | Example 54 |
|---|---|---|---|---|---|---|---|---|---|---|---|---|---|---|
| Epoxy resin | Propylene oxide-modified bisphenol A-type epoxy resin | AER9000 | 7 | 7 | 8 | 8 | 8 | 8 | 8 | 8 | 8 | 8 | 8 | 8 |
| Acid anhydride | Succinic anhydride or derivative thereof | 2 Octenylsuccinic anhydride | 2 | 4 | 0.5 | 1.5 | 1 | 2 | 1 | 3 | 2 | 4 | 2 | 5 |
| Rosin | Acrylic acid-modified hydrogenated rosin | | 25 | 25 | 10 | 10 | 15 | 15 | 20 | 20 | 25 | 25 | 30 | 30 |
| Solvent | Diethylene glycol monohexyl ether (HeDG) | | 16.5 | 14.5 | 32 | 31 | 26.5 | 25.5 | 21.5 | 19.5 | 15.5 | 13.5 | 10.5 | 7.5 |
| | Triethylene glycol monomethyl ether (methyl triglycol MTG)) | | 20 | 20 | 20 | 20 | 20 | 20 | 20 | 20 | 20 | 20 | 20 | 20 |
| Thixotropoc | Polyamide | | 7 | 7 | 7 | 7 | 7 | 7 | 7 | 7 | 7 | 7 | 7 | 7 |
| agent | Hydrogenated castor oil | | 0.5 | 0.5 | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 | 5 | 5 |
| | | Eicosanedioic acid | 5 | 5 | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 | 100 | 100 |
| Rosin/acid anhydride, mass ratic | | | 12.50 | 6.25 | 20.00 | 6.67 | 15.00 | 7.50 | 20.00 | 6.67 | 12.50 | 6.25 | 15.00 | 6.00 |
| Rosin/epoxy resin, mass ratio | | | 3.57 | 3.57 | 1.25 | 1.25 | 1.88 | 1.88 | 2.50 | 2.50 | 3.13 | 3.13 | 3.75 | 3.75 |
| Evaluation | Solderability | | A | A | B | B | A | A | A | A | A | A | A | A |
| | Capability of preventing cracking of flux residue | | B | B | C | A | B | A | C | A | B | B | B | B |
| | Capability of preventing tackiness of flux residue | | A | C | C | C | B | B | B | C | A | C | A | C |

**[Table 8]**

| Flux | | | Example 55 | Example 56 | Example 57 | Example 58 | Example 59 | Example 60 | Example 61 | Example 62 | Example 63 | Example 64 | Example 65 | Example 66 |
|---|---|---|---|---|---|---|---|---|---|---|---|---|---|---|
| Epoxy resin | Propylene oxide-nodified bisphenol A-type epoxy esin | AER9000 | 9 | 9 | 9 | 9 | 9 | 9 | 9 | 9 | 9 | 9 | 9 | 9 |
| Acid anhydride | Succinic anhydride or derivative hereof | 2-Octenylsuccinic anhydride | 1 | 2 | 1 | 2 | 3 | 2 | 3 | 4 | 2 | 3 | 4 | 5 |
| Rosin | Acrylic acid-modified hydrogenated rosin | | 15 | 15 | 20 | 20 | 20 | 25 | 25 | 25 | 30 | 30 | 30 | 30 |
| Solvent | Diethylene glycol monohexyl ether (HeDG) | | 25.5 | 24.5 | 20.5 | 19.5 | 18.5 | 14.5 | 13.5 | 12.5 | 9.5 | 8.5 | 7.5 | 6.5 |
| | Triethylene glycol monomethyl ether (methyl triglycol MTG)) | | 20 | 20 | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 | 7 | 7 |
| | Hydrogenated castor oil | | 0.5 | 0.5 | 0.5 | 0.5 | 0.5 | 0.5 | 0.5 | 0.5 | 0.5 | 0.5 | 0.5 | 0.5 |
| Activator | | Adipic acid | 5 | 5 | 5 | 5 | 5 | 5 | 5 | 5 | 5 | 5 | 5 | 5 |
| | Organic acid | Eicosanedioic acid | 5 | 5 | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 | 100 | 100 |
| Rosin/acid anhydride, mass ratio | | | 15.00 | 7.50 | 20.00 | 10.00 | 6.67 | 12.50 | 8.33 | 6.25 | 15.00 | 10.00 | 7.50 | 6.00 |
| Rosin/epoxy resin, mass ratic | | | 1.67 | 1.67 | 3.22 | 2.22 | 2.22 | 2.78 | 2.78 | 2.78 | 3.33 | 3.33 | 3.33 | 3.33 |
| Evaluation | Solderability | | A | A | A | A | A | A | A | A | A | A | A | A |
| | Capability of preventing cracking of flux residue | | B | A | C | A | A | A | A | A | B | B | B | B |
| | Capability of preventing tackiness of flux residue | | B | B | B | B | C | A | B | C | A | B | B | C |

**[Table 9]**

| Flux | | | Example 67 | Example 68 | Example 69 | Example 70 | Example 71 | Example 72 | Example 73 | Example 74 | Example 75 | Example 76 | Example 77 | Example 78 |
|---|---|---|---|---|---|---|---|---|---|---|---|---|---|---|
| Epoxy resin | Propylene oxide-modified bisphenol A-type epoxy resin | AER9000 | 10 | 10 | 10 | 10 | 10 | 10 | 10 | 10 | 10 | 10 | 10 | 10 |
| Acid anhydride | Succinic anhydride or derivative thereof | 2 Octenylsuccinic anhydride | 1 | 2 | 1 | 2 | 3 | 2 | 3 | 4 | 2 | 3 | 4 | 5 |
| Rosin | Acrylic acid-modified hydrogenated rosin | | 15 | 15 | 20 | 20 | 20 | 25 | 25 | 25 | 30 | 30 | 30 | 30 |
| Solvent | Diethylene glycol monohexyl ether (HeDG) | | 24.5 | 23.5 | 19.5 | 18.5 | 17.5 | 13.5 | 12.5 | 11.5 | 8.5 | 7.5 | 6.5 | 5.5 |
| | Triethylene glycol monomethyl ether (methyl triglycol MTG)) | | 20 | 20 | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 | 7 | 7 |
| | Hydrogenated castor oil | | 0.5 | 0.5 | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 | 5 | 5 |
| | | Eicosanedioic acid | 5 | 5 | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 | 1.5 | 1.5 |
| | Imidazole compound | 2-Ethylimidazale | 0.5 | 0.5 | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 | 100 | 100 |
| Rosin/acid anhydride, mass ratic | | | 15.00 | 7.50 | 20.00 | 10.00 | 6.67 | 12.50 | 8.33 | 6.25 | 15.00 | 10.00 | 7.50 | 6.00 |
| Rosin/epoxy resin, mass ratio | | | 1.50 | 1.50 | 2.00 | 2.00 | 2.00 | 2.50 | 2.50 | 2.50 | 3.00 | 3.00 | 3.00 | 3.00 |
| Evaluation | Solderobility | | A | A | A | A | A | A | A | A | A | A | A | A |
| | Capability of preventing cracking of flux residue | | B | A | C | A | A | A | A | A | B | B | B | B |
| | Capability of preventing tackiness of flux residue | | B | B | B | B | C | B | B | C | A | B | B | C |

**[Table 10]**

| Flux | | | Example 79 | Example 80 | Example 81 | Example 82 | Example 83 | Example 84 | Example 85 | Example 86 |
|---|---|---|---|---|---|---|---|---|---|---|
| Epoxy resin | Propylene oxide-modified bisphenol A-type epoxy resin | AER9000 | 11 | 11 | 11 | 11 | 11 | 11 | 11 | 11 |
| Acid anhydride | Succinic anhydride or derivative thereof | 2 Octenylsuccinic anhydride | 1 | 2 | 1 | 2 | 3 | 2 | 3 | 4 |
| Rosin | Acrylic acid-modified hydrogenated rosin | | 15 | 15 | 20 | 20 | 20 | 25 | 25 | 25 |
| Solvent | Diethylene glycol monohexyl ether (HeDG) | | 23.5 | 22.5 | 18.5 | 17.5 | 16.5 | 12.5 | 11.5 | 10.5 |
| | Triethylene glycol monomethyl ether (methyl triglycol (MTG)) | | 20 | 20 | 20 | 20 | 20 | 20 | 20 | 20 |
| Thixotropic agent | Polyamide | | 7 | 7 | 7 | 7 | 7 | 7 | 7 | 7 |
| | Hydrogenated castor oil | | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 |
| | | Eicosanedioic acid | 5 | 5 | 5 | 5 | 5 | 5 | 5 | 5 |
| | | Hydrogenated dimer acid | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 |
| | Imidazole compound | 2 Ethylimidazole | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 |
| Rosin/acid anhydride, mass ratio | | | 15.00 | 7.50 | 20.00 | 10.00 | 6.67 | 12.50 | 8.33 | 6.25 |
| Rosin/epoxy resin, mass ratio | | | 1.36 | 1.36 | 1.82 | 1.82 | 1.82 | 2.27 | 2.27 | 2.27 |
| Evaluation | Solderability | | A | A | A | A | A | A | A | A |
| | Capability of preventing cracking of flux residue | | B | A | C | A | A | A | A | A |
| | Capability of preventing tackiness of flux residue | | B | B | B | B | C | B | B | C |

**[Table 11]**

| Flux | | | Example 87 | Example 88 | Example 89 | Example 90 | Example 91 | Example 92 | Example 93 | Example 94 | Example 95 | Example 96 |
|---|---|---|---|---|---|---|---|---|---|---|---|---|
| Epoxy resin | Propylene oxide-modified bisphenol A-type epoxy resin | AER9000 | 12 | 12 | 12 | 12 | 12 | 12 | 13 | 13 | 13 | 13 |
| Acid anhydride | Succinic anhydride or derivative thereof | 2-Octenylsuccinic anhydride | 1 | 2 | 1 | 3 | 2 | 4 | 1 | 3 | 2 | 4 |
| Rosin | Acrylic acid-nodified hydrogenated osin | | 15 | 15 | 20 | 20 | 25 | 25 | 20 | 20 | 25 | 25 |
| Solvent | Diethylene glycol monohexyl ether (HeDG) | | 22.5 | 21.5 | 17.5 | 15.5 | 11.5 | 9.5 | 16.5 | 14.5 | 10.5 | 8.5 |
| | Triethylene glycol monomethyl ether (methyl triglycol (MTG)) | | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 |
| | [lydrogenated castor oil | | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 |
| | | Eicosanedioic acid | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 |
| | Halogen compound | Trans-2,3-dibromo-2-butene-1,4-diol | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 |
| Rosin/acid anhydride, mass ratic | | | 15.00 | 7.50 | 20.00 | 6.67 | 12.50 | 6.25 | 20.00 | 6.67 | 12.50 | 6.25 |
| Rosin/epoxy resin, mass ratio | | | 1.25 | 1.25 | 1.67 | 1.67 | 2.08 | 2.08 | 1.54 | 1.54 | 1.92 | 1.92 |
| Evaluation | Solderability | | A | A | A | A | A | A | A | A | A | A |
| | Capability of preventing cracking of flux residue | | B | A | C | A | A | A | C | A | A | A |
| | Capability of preventing tackiness of flux residue | | C | C | B | C | B | C | B | C | B | C |

**[Table 12]**

| Flux | | | Example 97 | Example 98 | Example 99 | Example 100 | Example 1 | Example 101 | Example 102 | Example 103 | Example 104 | Example 105 |
|---|---|---|---|---|---|---|---|---|---|---|---|---|
| Epoxy resin | Propylene oxide-modified bisphenol A-type epoxy resin | AER9000 | 14 | 14 | 14 | 14 | 15 | 15 | 15 | 15 | 16 | 16 |
| Acid anhydride | Succinic anhydride or derivative thereof | Octenylsuccinic anhydride | 1 | 3 | 2 | 4 | 1 | 3 | 2 | 4 | 1 | 3 |
| Rosin | Acrylic acid-nodified hydrogenated osin | | 20 | 20 | 25 | 25 | 20 | 20 | 25 | 25 | 20 | 20 |
| Solvent | Diethylene glycol monohexyl ether (HeDG) | | 15.5 | 13.5 | 9.5 | 7.5 | 14.5 | 12.5 | 8.5 | 6.5 | 13.5 | 11.5 |
| | Triethylene glycol monomethyl ether (methyl triglycol (MTG)) | | 20 | 20 | 20 | 20 | 20 | 20 | 20 | 20 | 20 | 20 |
| Thixotropic agent | Polyamide | | 7 | 7 | 7 | 7 | 7 | 7 | 7 | 7 | 7 | 7 |
| | Hydrogenated castor oil | | 0.5 | 0.5 | 0.5 | 0.5 | 0.5 | 0.5 | 0.5 | 0.5 | 0.5 | 0.5 |
| Activator | Organic acid | Adipic acid | 5 | 5 | 5 | 5 | 5 | 5 | 5 | 5 | 5 | 5 |
| | | Eicosanedioic acid | 5 | 5 | 5 | 5 | 5 | 5 | 5 | 5 | 5 | 5 |
| | | Hydrogenated dimer acid | 10 | 10 | 10 | 10 | 10 | 10 | 10 | 10 | 10 | 10 |
| | Halogen compound | Trans-2,3-dibromo-2-butenc-1,4-diol | 1.5 | 1.5 | 1.5 | 1.5 | 1.5 | 1.5 | 1.5 | 1.5 | 1.5 | 1.5 |
| | Imidazole compound | 2-Ethylimidazole | 0.5 | 0.5 | 0.5 | 0.5 | 0.5 | 0.5 | 0.5 | 0.5 | 0.5 | 0.5 |
| Total/% by mass | | | 100 | 100 | 100 | 100 | 100 | 100 | 100 | 100 | 100 | 100 |
| Rosin/acid anhydride, mass ratio | | | 20.00 | 6.67 | 12.50 | 6.25 | 20.00 | 6.67 | 12.50 | 6.25 | 20.00 | 6.67 |
| Rosin/epoxy resin, mass ratic | | | 1.43 | 1.43 | 1.79 | 1.79 | 1.33 | 1.33 | 1.67 | 1.67 | 1.25 | 1.25 |
| Evaluation | Solderability | | A | A | A | A | A | A | A | A | A | A |
| | Capability of preventing cracking of flux residue | | C | A | A | A | C | A | A | A | C | A |
| | Capability of preventing tackiness of flux residue | | B | C | B | C | B | C | B | C | C | C |

From the results shown in Tables 1 to 12, it was found that, when the fluxes of Examples 1 to 105 to which the present invention was applied were used, occurrence of cracking of flux residue due to temperature changes could be suppressed even in the case of air reflow soldering.

### [Evaluation of difference in reflow conditions (atmosphere)]

Regarding the cases where the fluxes of Comparative Examples 7 to 9 were used, the reflow conditions in the evaluation of solderability, the evaluation of capability of preventing cracking of flux residue, and the evaluation of capability of preventing tackiness of flux residue described above were performed under an air atmosphere (approximately 80 vol% of nitrogen and approximately 20 vol% of oxygen) and under a nitrogen atmosphere (oxygen concentration of 3,000 ppm). These evaluation results are shown in Table 13.

**[Table 13]**

| Flux | | | Example 8 | Comparative Example 7 | | Comparative Example 8 | | Comparative Example 9 | |
|---|---|---|---|---|---|---|---|---|---|
| Epoxy resin | Propylene oxide-modificd bisphenol A-type epoxy resin | AER9000 | 12 | | | | | | |
| | Fatty acid polycarboxylic acid glycidyl ester mixture | [PU-22G | | 10 | | | | | |
| Polybutadiene | Hydroxyl-terminated liquid polybutadiene | Poly bd R-15HT | | | | 12 | | 15 | |
| Acid anhydride | Succinic anhydride or derivative thereof | 2-Octenylsuccinic anhydride | 3 | | | | | | |
| | Aliphatic polycarboxylic acid polyanhydride mixture | [PU-22AH | | 10 | | | | | |
| Rosin | Acrylic acid-modified hydrogenated rosin | | 20 | 20 | | 20 | | 20 | |
| Solvent | Diethylene glycol monohexyl ether (HeDG) | | 15.5 | 10.5 | | 18.5 | | 15.5 | |
| | Triethylene glycol monomethyl ether (methyl triglycol (MTG)) | | 20 | 20 | | 20 | | 20 | |
| Thixotropic agent | Polyamide | | 7 | 7 | | 7 | | 7 | |
| | Hydrogenated castor oil | | 0.5 | 0.5 | | 0.5 | | 0.5 | |
| Activator | Organic acid | Adipic acid | 5 | 5 | | 5 | | 5 | |
| | | Eicosanedioic acid | 5 | 5 | | 5 | | 5 | |
| | | Hydrogenated dimer acid | 10 | 10 | | 10 | | 10 | |
| | Halogen compound | Trans-2,3-dibromo-2-butene-1,4-diol | 1.5 | 1.5 | | 1.5 | | 1.5 | |
| | Imidazole compound | 2-Ethylimidazole | 0.5 | 0.5 | | 0.5 | | 0.5 | |
| Total/% by mass | | | 100 | 100 | | 100 | | 100 | |
| Rosin/acid anhydride, mass ratio | | | 6.67 | 2.00 | | - | | - | |
| Rosin/epoxy resin, mass ratic | | | 1.67 | 2.00 | | 1.67 | | 1.33 | |
| Evaluation | Reflow condition | Atmosphere | Air | Air | Nitrogen | Air | Nitrogen | Air | Nitrogen |
| | Solderability | | A | A | A | A | A | A | A |
| | Capability of preventing cracking of flux residue | | A | D | C | D | C | D | C |
| | Capability of preventing tackiness of flux residue | | C | A | B | A | B | A | B |

From the results shown in Table 13, it was found that, when the fluxes of Comparative Examples 7 to 9 were used, the occurrence of cracking of flux residue due to temperature changes could not be suppressed in the case of air reflow soldering. In contrast, in the flux according to Example 8 to which the present invention was applied, the occurrence of cracking of flux residue due to temperature changes was suppressed in the case of air reflow soldering, and it was recognized that the flux was particularly suitable for air reflow soldering.

Hereinabove, preferable examples of the present invention have been described, but the present invention is not limited to these examples. Configurations can be added, omitted, and replaced, and other modifications can be made within a range not departing from the gist of the present invention. The present invention is not limited by the above description, and is limited only by the scope of the appended claims.

## Claims

1. A flux comprising:
a component (P) that is a compound having an oxyalkylene group and an epoxy group;
at least one acid anhydride selected from a group consisting of succinic anhydride and derivatives of the succinic anhydride;
a rosin;
a solvent;
a thixotropic agent; and
an activator.

2. The flux according to Claim 1, wherein the oxyalkylene group is at least one selected from a group consisting of an oxyethylene group and an oxypropylene group.

3. The flux according to Claim 1, wherein an epoxy equivalent of the component (P) is 120 g/eq or more.

4. The flux according to Claim 1, wherein the component (P) includes a propylene oxide-modified bisphenol-type epoxy resin.

5. The flux according to Claim 1, wherein the acid anhydride is a compound represented by General Formula (AA-1) shown below, 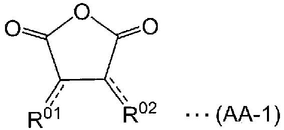 [in the formula, R⁰¹ and R⁰² each independently represent a hydrocarbon group which may have a substituent, or a hydrogen atom, a bond between a carbon atom constituting a five-membered ring and R⁰¹ is a double bond or a single bond, and a bond between a carbon atom constituting the five-membered ring and R⁰² is a double bond or a single bond].

6. The flux according to Claim 5, wherein R⁰¹ or R⁰² in Formula (AA-1) is a chain-like unsaturated aliphatic hydrocarbon group having 3 to 18 carbon atoms.

7. The flux according to Claim 1, wherein the acid anhydride includes 2-octenylsuccinic anhydride.

8. The flux according to Claim 1, wherein the rosin includes at least one selected from a group consisting of an acrylic acid-modified hydrogenated rosin, a polymerized rosin, and a hydrogenated rosin.

9. The flux according to Claim 1, wherein a mixing ratio of the rosin to the acid anhydride is, as a mass ratio represented by rosin/acid anhydride, more than 5 and less than 25.

10. The flux according to Claim 1, wherein a mixing ratio of the rosin to the component (P) is, as a mass ratio represented by rosin/component (P), 4.0 or less.

11. A flux comprising:
a reaction product of at least one selected from a group consisting of succinic anhydride, derivatives of succinic anhydride, and a rosin, with a component (P) that is a compound having an oxyalkylene group and an epoxy group;
a solvent;
a thixotropic agent;
an activator;
a rosin; and
at least one acid selected from a group consisting of succinic acid and derivatives of the succinic acid, or an acid anhydride of the at least one acid.

12. The flux according to Claim 11, wherein the activator includes an imidazole compound.

13. A solder paste comprising:
a solder alloy powder; and
the flux according to any one of Claims 1 to 12.

14. A method for producing a bonded body, comprising a step of soldering a component and a substrate to obtain a bonded body,
wherein, during the step of soldering, reflow is performed under an air atmosphere using the solder paste according to Claim 13.
